(19) Europäisches Patentamt
European Patent Office
Office européen des brevets

(11) **EP 2 299 602 A1**

(12) **EUROPEAN PATENT APPLICATION**
published in accordance with Art. 153(4) EPC

(43) Date of publication:
**23.03.2011 Bulletin 2011/12**

(51) Int Cl.:
**H04B 1/707** (2011.01)　**H04J 11/00** (2006.01)
**H04L 1/18** (2006.01)　**H04W 28/04** (2009.01)

(21) Application number: **09794481.3**

(22) Date of filing: **08.07.2009**

(86) International application number:
**PCT/JP2009/062475**

(87) International publication number:
**WO 2010/005037 (14.01.2010 Gazette 2010/02)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **09.07.2008 JP 2008179111**

(71) Applicant: **Sharp Kabushiki Kaisha**
**Osaka-shi, Osaka 545-8522 (JP)**

(72) Inventors:
• **YOSHIMOTO, Takashi**
**Osaka-shi, Osaka 545-8522 (JP)**

• **NOGAMI, Toshizo**
**Osaka-shi, Osaka 545-8522 (JP)**
• **YAMADA, Ryota**
**Osaka-shi, Osaka 545-8522 (JP)**
• **SHIMEZAWA, Kazuyuki**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **COMMUNICATION DEVICE, COMMUNICATION SYSTEM, RECEPTION METHOD, AND COMMUNICATION METHOD**

(57)　A communication device includes: a reception unit which receives a signal including an initial transmission signal and a retransmission signal for any one signal; a detection order determination unit which determines an order of detection of the initial transmission signal and the retransmission signal from the signal received by the reception unit, according to retransmission repetition numbers of the initial transmission signal and the retransmission signal; and a signal detection unit which detects signals including detected signals for the initial transmission signal and the retransmission signal from the signal received by the reception unit using signals detected by the communication device according to the order determined by the detection order determination unit. The signal detection unit includes a combining unit which combines the detected retransmission signal and a signal detected from a previously received signal including at least one related signal received earlier than the retransmission signal.

FIG. 5

**Description**

TECHNICAL FIELD

The present invention relates to a communication device, a communication system, a reception method and a communication method, and more particularly, to a communication device, a communication system, a reception method and a communication method to which automatic repeat request control is applied.
This application claims priority to and the benefits of Japanese Patent Application No. 2008-179111 filed on July 09, 2008, the disclosure of which is incorporated herein by reference.

BACKGROUND ART

Hybrid automatic repeat request (HARQ), which is a combination of automatic repeat request (ARQ) disclosed in Non-Patent Documents 1 and 2 and error correction coding such as turbo coding, is an example of an error control technique in communication systems. HARQ is a technique by which a receiver requests a transmitter to perform retransmission when detecting an error from a received signal, and performs a decoding process on a combined signal of a signal received again and a previously received signal. As examples of the HARQ, chase combining (CC) and incremental redundancy (IR) are well known. In HARQ using CC, when an error is detected from a received packet, a request is made for retransmission of the same packet. Combining of the two received packets increases reception quality. Further, in HARQ using IR, redundant bits are divided and sequentially retransmitted bit by bit, making it possible to decrease the coding rate according to an increase of the number of retransmissions and enhance the error correction capability.

Meanwhile, a multi carrier-code division multiplexing (MC-CDM) scheme, a spread-orthogonal frequency division multiplexing (spread-OFDM) scheme, and the like are combinations between a multi-carrier transmission scheme, such as orthogonal frequency division multiplexing (OFDM), and a code division multiplexing (CDM) scheme. In these schemes, data in which coded code and spread code are multiplied is arranged over subcarriers to obtain the effect of frequency diversity for good characteristics under multi-path fading environments. However, destruction of orthogonality between the spreading codes in code multiplexing causes multi-code interference (MCI), which, in turn, causes characteristic degradation.

As a method of solving this problem, for example, a successive interference canceller (SIC) is disclosed in Non-Patent Documents 3 and 4. The SIC disclosed in Non-Patent Documents 3 and 4 is a method of performing signal detection by performing despreading, demodulation, and decoding in order beginning with a channel signal having high received signal power or received signal to interference plus noise power ratio (SINR) of each code channel among code-multiplexed received signals, obtaining a determination signal for an information symbol, and subtracting an interference signal replica (undesired signal) created using the result of the determination from the received signal. Iteratively performing this procedure makes it possible to accurately remove a signal serving as an interference signal other than a desired code channel and suppress characteristic degradation caused by the destruction of orthogonality between spreading code sequences.

Non-Patent Document 1: D. Chase, "Code combining-A maximum likelihood decoding approach for combining and arbitrary number of noisy packets" IEEE Trans. Commun., vol. COM-33, pp. 385-393, May 1985.
Non-Patent Document 2: J. Hagenauer, "Rate-compatible punctured convolutional codes (RCPC codes) and their application," IEEE Trans. Commun., vol. 36, pp. 389-400, April 1988.
Non-Patent Document 3: Ishihara, Takeda, and Adachi, "DS-CDMA Frequency Domain MAI Canceller," The Institute of Electronics, Information and Communication Engineers, Technical Report RCS 2004-316, January 2005.
Non-Patent Document 4: Akita, Suyama, Fukawa, and Suzuki, "Interference Canceller in Downlink Using Transmission Power Control of MC-CDMA," The Institute of Electronics, Information and Communication Engineers, Technical Report RCS 2002-35, April 2002.

DISCLOSURE OF INVENTION

Problem to be Solved by the Invention

However, in a communication system using the above-described ARQ control, when a receiver uses the SIC, an order to remove a signal other than a desired code channel, which serves as an interference signal, is determined based on a received signal power or a received signal SINR of each code channel, this may not be optimal. That is, probability of the removal order determination not corresponding to order of code channel signals having a small error increases. As a result, an error is detected from the result of a decoding process for a combined signal of a signal received again and a previously received signal and retransmission is requested again, which increases a retransmission iteration number and thus delay.

The present invention has been made in view of the above-described circumstances, and an object of the invention is to provide a communication device, a communication system, a reception method and a communication method that prevent delay from increasing due to repeated retransmission.

Means for Solving the Problem

The present invention has been made to solve the above-described problems. According to an aspect of the present invention, there is provided a communication device which performs a hybrid automatic repeat request to request a transmission source to perform retransmission when an error is detected from a received signal, the communication device including: a reception unit which receives a signal including an initial transmission signal and a retransmission signal for any one signal, the initial transmission signal and the retransmission signal being multiplexed; a detection order determination unit which determines an order of detection of the initial transmission signal and the retransmission signal from the signal received by the reception unit, according to retransmission repetition numbers of the initial transmission signal and the retransmission signal included in the signal received by the reception unit; and a signal detection unit which removes an interference component from the signal received by the reception unit using signals detected by the communication device according to the order determined by the detection order determination unit, the detected signals including a detected signal for the initial transmission signal and a detected signal for the retransmission signal, to detect the initial transmission signal and the retransmission signal from the signal received by the reception unit, wherein the signal detection unit includes a combining unit which combines the detected retransmission signal and a signal detected from a previously received signal including at least one related signal received earlier than the retransmission signal.

In the communication device according to the aspect of the present invention, the detection order determination unit may determine the detection order so that the order of the retransmission signal is earlier than that of the initial transmission signal.

In the communication device according to the aspect of the present invention, the detection order determination unit may determine the detection order to enable a signal having a greater retransmission repetition number to be first detected.

In the communication device according to the aspect of the present invention, the detection order determination unit may determine the orders of the initial transmission signal and the retransmission signal based on a reception level represented by a received signal power, or a received signal to interference plus noise power ratio.

In the communication device according to the aspect of the present invention, the initial transmission signal and the retransmission signal may be signals error-correction-coded in the transmission source, and when detecting the signal, the signal detection unit may generate a replica signal of an interference component to the signal to be detected using a signal obtained by error-correction-decoding the signal detected by the communication device with error correction code, and remove the replica signal from the signal received by the reception unit.

In the communication device according to the aspect of the present invention, when a retransmission signal is included in the signal received by the reception unit, the signal detection unit may remove an interference component from the previously received signal using the detected signal according to a detection order determined again by the detection order determination unit for the previously received signal including at least one related signal received earlier than the retransmission signal to detect the signal from the previously received signal.

In the communication device according to the aspect of the present invention, the signal received by the reception unit may be a code-multiplexed signal in which the initial transmission signal and the retransmission signal are multiplied by unique spreading code sequences, and after removing the interference component from the signal received by the reception unit, the signal detection unit may multiply the signal from which the interference component has been removed, by the spreading code unique to the signal to be detected, to detect the signal to be detected.

In the communication device according to the aspect of the present invention, the signal received by the reception unit may be a signal in which the initial transmission signal and the retransmission signal may be transmitted from different antennas and spatially multiplexed, and after removing the interference component from the signal received by the reception unit, the signal detection unit may detect the signal to be detected from the signal from which the interference component has been removed, based on a propagation channel estimation value for each antenna.

In the communication device according to the aspect of the present invention, the signal detection unit may perform detection of the initial transmission signal and the retransmission signal according to the order determined by the detection order determination unit, once for each signal.

In the communication device according to the aspect of the present invention, the signal detection unit may iteratively perform detection of the initial transmission signal and the retransmission signal according to the order determined by the detection order determination unit several times.

According to another aspect of the present invention, there is provided a communication system including a first communication device and a second communication device and performing hybrid automatic repeat request in which the second communication device requests the first communication device to perform retransmission when an error is detected from a signal received from the first communication device, wherein the second communication device includes: a reception unit which receives a signal including an initial transmission signal and a retransmission signal for any one signal, the initial transmission signal and the retransmission signal being multiplexed; a detection order determination unit which determines an order of detection of the initial transmission signal and the retransmission signal from the signal received by the reception unit, according to retransmission repetition numbers of the initial transmission signal and the retransmission signal included in the signal received by the reception unit; and a signal detection unit which removes an interference component from the signal received by the reception unit using signals detected by the communication device according to the order determined by the detection order determination unit, the detected signals including a detected signal for the initial transmission signal and a detected signal for the retransmission signal, to detect the initial transmission signal and the retransmission signal, and wherein the signal detection unit includes a combining unit which combines the detected retransmission signal and a signal detected from a previously received signal including at least one related signal received earlier than the retransmission signal.

In the communication system according to the aspect of the present invention, the initial transmission signal and the retransmission signal may be error-correction-coded signals, and when detecting the signal, the signal detection unit may generate a replica signal of an interference component to the signal to be detected using a signal obtained by error-correction-decoding the signal detected by the communication device with error correction code, and remove the replica signal from the signal received by the reception unit.

In the communication system according to the aspect of the present invention, the first communication device may include: a retransmission control unit which determines transmission power to transmit the initial transmission signal and the retransmission signal based on retransmission repetition numbers; and a transmission power control unit which controls to transmit the initial transmission signal and the retransmission signal with the transmission power determined by the retransmission control unit.

In the communication system according to the aspect of the present invention, the first communication device may include: a retransmission control unit which determines spreading code sequences by which the initial transmission signal and the retransmission signal are multiplied, based on the retransmission repetition numbers; and a spreading unit which multiplies the initial transmission signal and the retransmission signal by the spreading code sequences determined by the retransmission control unit, and after removing the interference component from the signal received by the reception unit, the signal detection unit of the second communication device multiplies the signal from which the interference component has been removed, by the spreading codes by which the spreading unit multiplies the signals to be detected, to detect the signals to be detected.

In the communication system according to the aspect of the present invention, the retransmission control unit may set a spreading code sequence resistant to destruction of the orthogonality by a spreading code sequence by which a signal of a great retransmission repetition number is multiplied.

In the communication system according to the aspect of the present invention, the spreading code sequence may be an orthogonal variable spreading factor code.

According to still another aspect of the present invention, there is provided a reception method in a communication device which performs a hybrid automatic repeat request to request a transmission source to perform retransmission when an error is detected from a received signal, the reception method including: receiving, by the communication device, a signal including an initial transmission signal and a retransmission signal for any one signal, the initial transmission signal and the retransmission signal being multiplexed; determining, by the communication device, an order of detection of the initial transmission signal and the retransmission signal from the signal received in the reception, according to retransmission repetition numbers of the initial transmission signal and the retransmission signal included in the signal received in the reception; and removing, by the communication device, an interference component from the signal received in the reception using signals detected by the communication device according to the order determined in the determination, the detected signals including a detected signal for the initial transmission signal and a detected signal for the retransmission signal, to detect the initial transmission signal and the retransmission signal from the signal received in the reception, wherein, in the removal, the communication device combines the detected retransmission signal and a signal detected from a previously received signal including at least one related signal received earlier than the retransmission signal.

According to still another aspect of the present invention, there is provided a communication method in a communication system including a first communication device and a second communication device and performing hybrid automatic repeat request in which the second communication device requests the first communication device to perform retransmission when an error is detected from a signal received from the first communication device, the communication method including: transmitting, by the first communication device, an initial transmission signal and a retransmission signal for any one signal; receiving, by the second communication device, a signal including the initial transmission signal and the retransmission signal for any one signal, the initial transmission signal and the retransmission signal being multiplexed; determining, by the second communication device, an order of detection of the initial transmission signal and the retransmission signal from the signal received in the reception, according to retransmission repetition numbers of the initial transmission signal and the retransmission signal included in the signal received in the reception; and removing, by the second communication device, an interference component from the signal received in the reception using signals detected by the communication device according to the order determined in the determination, the detected signals including a detected signal for the initial transmission signal and a detected signal for the retransmission signal, to detect the initial transmission signal and the retransmission signal, wherein, in the removal, the second communication device combines the detected retransmission signal and a signal detected from a previously received signal including at least one related signal received earlier than the retransmission signal.

Effect of the Invention

According to the present invention, the detection order determination unit determines the detection order according to the retransmission repetition number for signals interfering with each other, and the signal detection unit removes an interference component from the signal received by the reception unit using detected signals according to the order and detects the initial transmission signal and the retransmission signal. Accordingly, as the retransmission repetition number is greater, the detection order is advanced, such that the signal removal order can be determined in order from a code channel signal having a smaller error with higher accuracy, making it possible to perform signal detection with high accuracy to reduce the retransmission repetition number. Accordingly, it is possible to prevent delay from increasing due to a great signal retransmission repetition number.

BRIEF DESCRIPTION OF THE DRAWINGS

FIG. 1 is a schematic block diagram showing a configuration of a packet transmission device 100 according to a first embodiment of the present invention.
FIG. 2 is a schematic block diagram showing a configuration of an encoding unit 111 according to the first embodiment.
FIG. 3 is a schematic block diagram showing a configuration example when a turbo encoder which performs turbo coding at a coding rate R=1/3 is used as the error correction encoding unit 122 in the first embodiment.
FIG. 4 shows an example of a puncturing pattern in the first embodiment.
FIG. 5 is a schematic block diagram showing a configuration of packet reception device 200 in the first embodiment.
FIG. 6 is a diagram illustrating a code multiplexed signal when packets P1", P2', P3 and P4 are transmitted in code channels CH1 to CH4 in the first embodiment.
FIG. 7 is a schematic block diagram showing a configuration example of an interference cancellation unit 208 that performs successive iterative interference cancellation in the first embodiment.
FIG. 8 is a schematic block diagram showing a configuration of a code channel replica generation unit 705-1 in the first embodiment.
FIG. 9 shows an example of a combining process in a combining unit 711 in the first embodiment.
FIG. 10 is a flowchart illustrating operation of a packet reception device 200 in the first embodiment.
FIG. 11 is a schematic block diagram showing a configuration of a packet transmission device 300 according to a second embodiment of the present invention.
FIG. 12 is a schematic block diagram showing a configuration of packet reception device 400 in the second embodiment.
FIG. 13 is a diagram illustrating a stream in the second embodiment.
FIG. 14 is a schematic block diagram showing a configuration of an interference cancellation unit 405 in the second embodiment.
FIG. 15 is a schematic block diagram showing a configuration of a symbol replica generation unit 1204-1 in the second embodiment.
FIG. 16 is a flowchart illustrating receiving operation of the packet reception device 400 in the second embodiment.
FIG. 17 is a schematic block diagram showing a configuration of a packet transmission device 500 according to a third embodiment of the present invention.
FIG. 18 shows an orthogonal variable spreading factor (OVSF) code tree until a spreading factor of 4.
FIG. 19 shows an example of contents of a power level table for a retransmission repetition number in the third embodiment.
FIG. 20 shows power of the signal when a code multiplexing unit 102 multiplexes an output of the power control unit 1602 in the third embodiment.

FIG. 21 is a schematic block diagram showing a configuration of a packet reception device 600 in the third embodiment.

FIG. 22 is a schematic block diagram showing a configuration of the interference cancellation unit 1802 of the packet reception device 600 in the third embodiment.

FIG. 23 is a diagram illustrating operation of the packet reception device 600 in the third embodiment.

BEST MODE FOR CARRYING OUT THE INVENTION

[First Embodiment]

Hereinafter, a first embodiment of the present invention will be described with reference to the drawings. In this embodiment, in a packet communication system which includes a packet transmission device 100 (a first communication device) and a packet reception device 200 (a second communication device) and to which an MC-CDM scheme and a HARQ of requesting a transmission source to perform retransmission if an error is detected from a received signal are applied, the packet transmission device 100 (the first communication device) transmits a signal in which an initial transmission packet and a retransmission packet related to any one initial transmission packet before the initial transmission packet are code-multiplexed, and the packet reception device 200 (the second communication device) having an SIC using an iterative process receives the signal transmitted by the packet transmission device 100 and detects the signals in order, beginning with a signal of the retransmission packet among the code-multiplexed signals.

Here, the interference signal is an interference signal caused by to inter-code interference, and refers to the other code-multiplexed signal. That is, for example, if signals $P_1$ and $P_2$ are code-multiplexed, the signal $P_2$ is an interference signal to the signal $P_1$ and the signal $P_1$ is an interference signal to the signal $P_2$. That is, the signals $P_1$ and $P_2$ are code-multiplexed and become signals interfering with each other. The signal detection is a process of separating codes by performing a series of processes of propagation channel distortion correction, despreading, and demodulation necessary to obtain information bits after an interference cancellation process of regenerating an interference signal to a signal to be detected and removing the regenerated signal (replica) from a received signal. For example, when the signal $P_2$ is detected, signal detection is performed by code-separating the signal $P_2$ after removing the replica of the signal $P_1$ from the received signal. Here, since it is necessary to detect the signal to generate the above-described regenerated signal (replica), signal detection is performed by code-separating (despreading) the received signal without performing the interference cancellation process in initial signal detection.

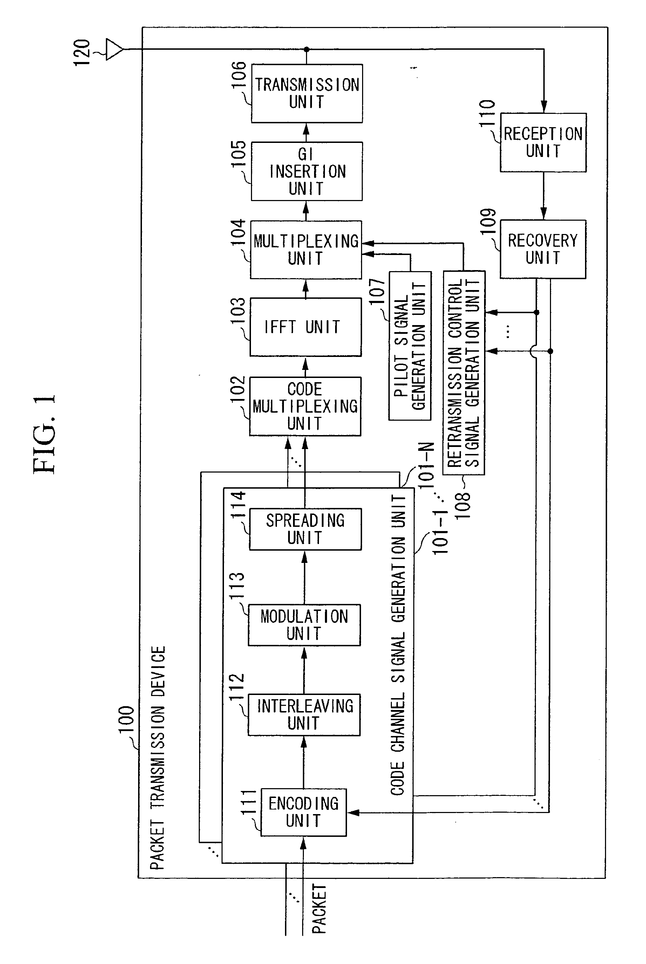

FIG. 1 is a schematic block diagram showing a configuration of the packet transmission device 100 according to an embodiment of the present invention. For example, the packet transmission device 100 is included in a base station in a downlink by a mobile wireless communication system and in a mobile station in an uplink. Also, the packet transmission device 100 is included in a relay station device in a downlink between a relay station and the mobile station. The packet transmission device 100 includes code channel signal generation units 101-1 to 101-N (where N is a code multiplex number), a code multiplexing unit 102, an IFFT unit 103, a multiplexing unit 104, a GI insertion unit 105, a transmission unit 106, a pilot signal generation unit 107, a retransmission control signal generation unit 108, a recovery unit 109, a reception unit 110 and an antenna unit 120. Each of the code channel signal generation units 101-1 to 101-N has a function of generating a code-multiplexed signal from an information bit sequence forming an input packet of each code channel, and includes an encoding unit 111, an interleaving unit 112, a modulation unit 113, and a spreading unit 114.

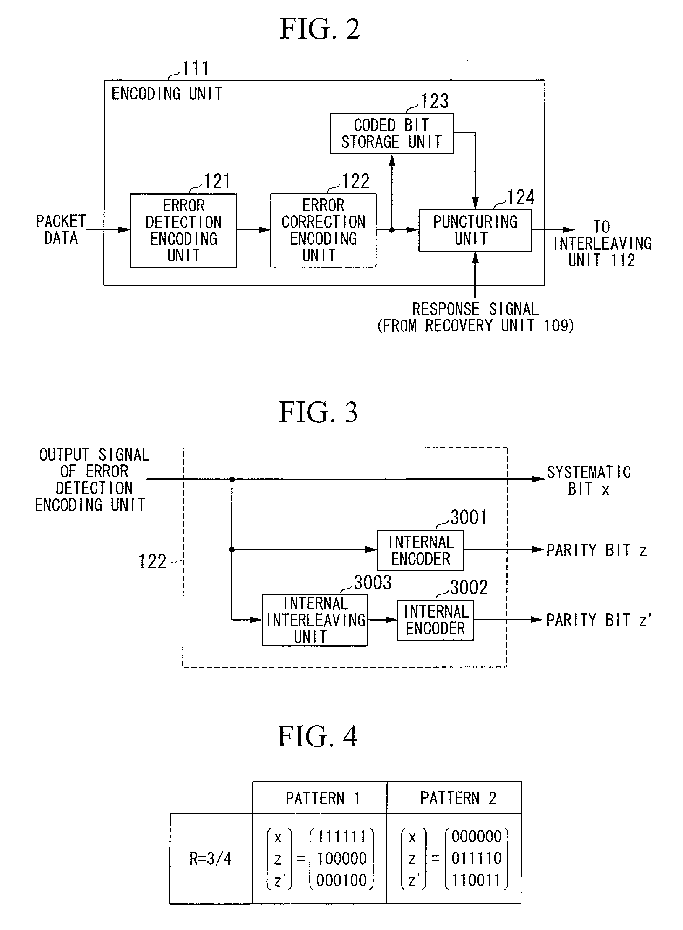

FIG. 2 is a schematic block diagram showing a configuration of the encoding unit 111. The encoding unit 111 has a function of adding redundant bits to an information bit sequence forming the input packet in order to enable the packet reception device 200 to perform error detection and error correction, and includes an error detection encoding unit 121, an error correction encoding unit 122, a coded bit storage unit 123, and a puncturing unit 124. The error detection encoding unit 121 performs error detection coding such as cyclic redundancy check (CRC) to enable the packet reception device 200 having received a packet to detect whether there is an error. The error correction encoding unit 122 performs error correction coding, such as a turbo code, a convolutional code, or a low density parity check (LDPC) code, on an output bit sequence from the error detection encoding unit 121. In the present embodiment, all bits forming a packet are transmitted in the same code channel, and the error detection encoding unit 121 and the error correction encoding unit 122 perform processing on each packet.

The coded bit storage unit 123 stores the coded bit sequence generated by the error correction encoding unit 122. When a retransmission packet is generated, the coded bit storage unit 123 outputs the stored coded bit sequence to the puncturing unit 124. The puncturing unit 124 performs a puncturing process on the coded bit sequence output from the error correction encoding unit 122 or the coded bit sequence output from the coded bit storage unit 123 according to a puncturing pattern determined based on a response signal (a receipt notification ACK/non-receipt notification NACK) of the packet reception device 200 received by the recovery unit 109 or the packet retransmission repetition number calculated from the response signal. That is, when the puncturing unit 124 generates the initial transmission packet (when the puncturing unit 124 receives the receipt notification ACK as the response signal to a previous packet), the puncturing unit 124 performs a puncturing process on a new coded bit sequence output from the error correction encoding unit 122 and when the puncturing unit 124 generates the retransmission packet (when the puncturing unit 124 receives the non-receipt notification NACK as the response signal), the puncturing unit 124 performs the puncturing process on the coded bit sequence stored in the coded bit storage unit 123. Also, the puncturing unit 124 may perform rate matching such as bit padding (bit insertion) or bit repetition, in addition to the puncturing process.

FIG. 3 is a schematic block diagram showing a configuration example when a turbo encoder which performs turbo coding at a coding rate R=1/3 is used as the error correction encoding unit 122.
The error correction encoding unit 122 includes internal encoders 3001 and 3002 and an internal interleaving unit 3003. When an error detection coded information bit sequence from the error detection encoding unit 121 is input, the error correction encoding unit 122 outputs three types of information bit sequences of systematic bits x, parity bits z, and parity bits z'. Here, the systematic bits x are a bit sequence input from the error detection encoding unit 121. The parity bits z are an output result obtained by the internal encoder 3001 performing a coding process on the bit sequence from the error detection encoding unit 121. The parity bit z' is an output result obtained by the internal interleaving unit 3003 first performing an interleaving process on the bit sequence from the error detection encoding unit 121 and the internal encoder 3002 receiving the result of the interleaving process and performing a coding process. Here, the internal encoder 3001 and the internal encoder 3002 may be the same encoders which perform coding in the same coding scheme, or may be different encoders. Preferably, both the internal encoder 3001 and the internal encoder 3002 use a recursive convolutional encoder. Hereinafter, the case in which the error correction encoding unit 122 has the configuration shown in FIG 3 and uses a turbo code will be described.

FIG. 4 is a diagram showing an example of a puncturing pattern when the error correction encoding unit 122 performs turbo coding at a coding rate R=1/3 and a puncturing process at a coding rate R=3/4. In FIG. 4, x is an information bit (including the redundant bits added for error detection) input to the error correction encoding unit 122 by the error detection encoding unit 121, and this information bit is output as it is (which is also referred to as a systematic bit). z and z' denote two types of redundant bits (parity bits) generated from the information bit. The puncturing unit 124 outputs bits in bit positions having "1" in the puncturing pattern shown in FIG. 4 among x, z, and z' output from the error correction encoding unit 122 or the coded bit storage unit 123.

For example, when IR is applied as HARQ, the puncturing unit 124 performs the puncturing process on coded bits forming an initial transmission packet according to pattern 1 of FIG. 4. That is, the puncturing unit 124 outputs all systematic bits since "x=111111" in the pattern 1 of FIG. 4, the first of every six bits since "z=100000" for the first type of parity bits, and the fourth of every six bits since "z'=000100" for the second type of parity bits.

Next, for coded bits forming the first retransmission packet, the puncturing unit 124 calls for coded bits of R=1/3 of the initial transmission packet from the coded bit storage unit 123, and the puncturing unit 124 outputs a signal obtained by performing the puncturing process in pattern 2 of FIG. 4. That is, the puncturing unit 124 outputs no systematic bits since "x=000000" in the pattern 2 of FIG. 4, outputs 4 bits from the second to fifth of every 6 bits since "z=011110" for the first type of parity bits, and outputs 4 bits excluding the third and fourth of every 6 bits since "z'=110011" for the second type of parity bits.

Further, for example, in the case where CC is applied as HARQ, when the puncturing unit 124 performs the puncturing process on the coded bits forming the initial transmission packet according to the pattern 1 of FIG. 4, the coded bit of R=1/3 of the initial transmission packet is called from the coded bit storage unit 123 even for the coded bits forming the retransmission packet, and the puncturing unit 124 outputs a signal obtained by performing the puncturing process in the pattern 1 of the FIG. 3, which is the same puncturing pattern as the initial transmission packet.

Referring back to FIG. 1, the interleaving unit 112 rearranges a bit arrangement of the coded bit sequence, which is an output from the encoding unit 111. The modulation unit 113 performs data modulation such as quadrature phase shift keying (QPSK) or 16 quadrature amplitude modulation (16QAM) on the output from the interleaving unit 112 to generate a modulation symbol. The spreading unit 114 multiplies the modulation symbol generated by the modulation unit 113 by a spreading code sequence unique to each of the code channel signal generation units 101-1 to 101-N. For example, an orthogonal code such as a Walsh-Hadamard code is used as the spreading code sequence. Thus, each of the code channel signal generation units 101-1 to 101-N has the above-described function, and generates the code channel signal including the initial transmission packet or the retransmission packet according to a retransmission request from the packet reception device 200.

The code multiplexing unit 102 code-multiplexes output signals from the respective code channel signal generation units 101-1 to 101-N. That is, a signal output by the code multiplexing unit 102 is a code-multiplexed signal in which the initial transmission signal and the retransmission signal transmitted in the respective code channels are multiplied by a unique spreading code sequence, so that the output signal is transmitted from the antenna unit 120. When, at an input to the IFFT unit 103, an output signal from the code multiplexing unit 102 allocated to a $k^{th}$ subcarrier is defined as S(k), S(k) can be expressed as shown in Equation (1).

$$S(k) = \sum_{u=0}^{N-1} c_{u,k \bmod SF} d_u\left(\left\lfloor \frac{k}{SF} \right\rfloor\right) \qquad\qquad (1)$$

where $\lfloor a \rfloor$ is a largest integer less than or equal to a.

N denotes a code multiplex number in the code multiplexing unit 102, and SF denotes a spreading factor of a spreading code multiplied at the spreading unit 114. $c_{u,v}$ denotes a value of the $v^{th}$ element in a spreading code sequence of the $u^{th}$ code channel, and "a mod b" denotes a remainder of a divided by b. $d_u$ denotes a modulation symbol of the $u^{th}$ code channel data-modulated by the modulation unit 113. k denotes order obtained by counting the subcarriers from subcarrier at lower frequency (the $k^{th}$ subcarrier), where $k = 0, 1, 2, \cdots N_{sub}-1$. Here, $N_{sub}$ is the total number of subcarriers.

The IFFT unit 103 performs frequency-time conversion on the signal code-multiplexed by the code multiplexing unit 102, for example, using inverse fast Fourier transform (IFFT) to generate a time domain signal. The multiplexing unit 104 multiplexes a time domain signal output from the IFFT unit 103 with a retransmission control signal output from the retransmission control signal generation unit 108 and a pilot signal output from the pilot signal generation unit 107. A multiplexing method in the multiplexing unit 104 may be any of time multiplexing, frequency multiplexing, code multiplexing, and the like. The pilot signal generation unit 107 generates a pilot signal used for propagation channel estimation. The retransmission control signal generation unit 108 generates a signal (retransmission control signal) for notifying the packet reception device 200 of an indication indicating how many a packet signal transmitted in each code channel is retransmitted. The retransmission control signal may include information on a transmitted signal such as a coding rate, a modulation multi-valued number, a spreading factor, and a spreading code.

The GI insertion unit 105 inserts a GI (Guard Interval) into a signal output from the multiplexing unit 104, and inputs the resultant signal to the transmission unit 106. The transmission unit 106 converts the output signal from the GI insertion unit 105 into an analog signal (digital/analog conversion), performs a filtering process to limit a band, performs conversion into a frequency band for transmission, and outputs the resultant signal. The antenna unit 120 transmits an output signal of the transmission unit 106 to the packet reception device 200. Or, the antenna unit 120 receives a signal including a response signal transmitted from the packet reception device 200.

The reception unit 110 performs conversion into a frequency band for a recovery process (signal detection process), a filtering process to limit a band, and conversion of an analog signal into a digital signal (A/D conversion) on a signal from the packet reception device 200 received from the antenna unit 120. The recovery unit 109 performs a received signal recovery process such as data demodulation and error correction decoding on the digital signal output by the reception unit 110, and extracts a response signal included in the signal from the packet reception device 200. The recovery unit 109 outputs the extracted response signal to the retransmission control signal generation unit 108 and the encoding unit 111. The recovery unit 109 has a function of processing the received signal based on a scheme of transmitting a received signal. The response signal is a transmission acknowledgement signal or a signal including information indicating whether the retransmission is requested. For example, the response signal includes a receipt notification ACK (ACKnowledge)/non-receipt notification NACK (Negative ACKnowledge) signal. When a receiver has not correctly received a packet transmitted from a transmitter, the receiver returns the non-receipt notification NACK signal to the transmitter. When the receiver has correctly received the packet, the receiver returns the receipt notification ACK signal. Also, when the transmitter has not received the response signal within a predetermined time, the transmitter may determine that the receiver has not correctly received the packet.

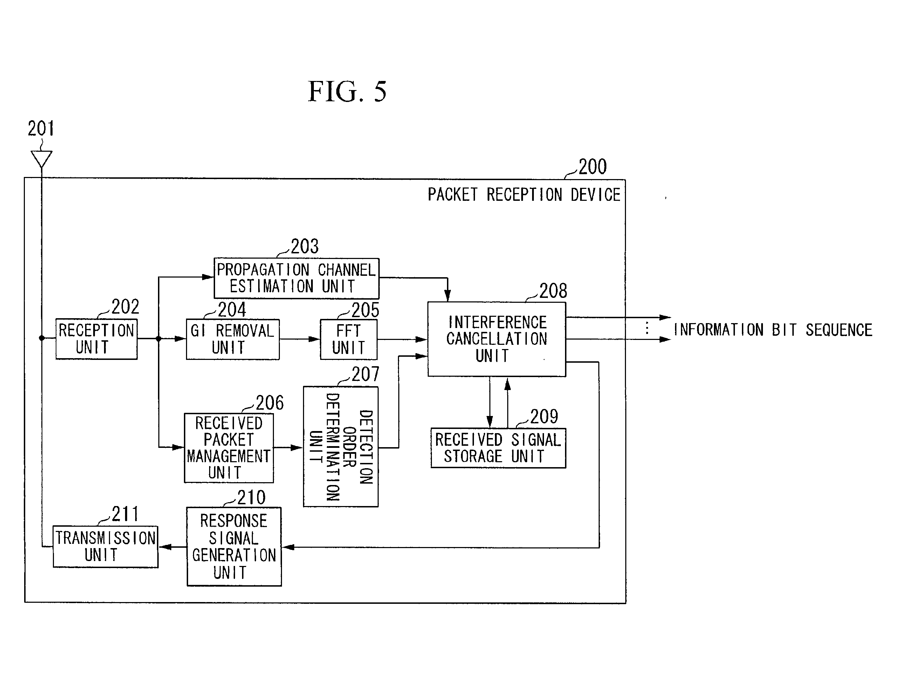

FIG. 5 is a schematic block diagram showing a configuration of the packet reception device 200 according to the present embodiment. For example, the packet reception device 200 is included in a mobile station device in a downlink by a mobile wireless communication system, and in a base station device in an uplink. Also, the packet reception device 200 is included in a relay station device in a downlink between the base station and a relay station. The packet reception device 200 includes an antenna unit 201, a reception unit 202, a propagation channel estimation unit 203, a GI removal unit 204, an FFT unit 205, a received packet management unit 206, a detection order determination unit 207, an interference cancellation unit 208, a received signal storage unit 209, a response signal generation unit 210, and a transmission unit 211.

The reception unit 202 receives a signal from the packet transmission device 100 via the antenna unit 201, performs conversion into a frequency band for signal processing, such as a signal detection process, and a filtering process to limit a band, and then performs conversion from an analog signal to a digital signal (analog/digital conversion). The signal received by the reception unit 202 is a signal including an initial transmission packet (an initial transmission signal) and a retransmission packet (a retransmission signal) for a packet transmitted in the past, the initial transmission packet and the retransmission packet interfering with each other. The propagation channel estimation unit 203 estimates a propagation channel (an impulse response, a transfer function, or the like) through which the received signal has passed, using the pilot signal included in the received signal converted into the digital signal by the reception unit 202.

Alternatively, another signal such as a control channel, a preamble, or the like from which the propagation channel can be estimated, rather than the pilot signal, may be used.

The received packet management unit 206 extracts information for determining how many a signal of each code channel included in the received signal has been retransmitted (including the initial transmission packet), i.e., information indicating the retransmission repetition number from the retransmission control signal included in the received signal converted into the digital signal by the reception unit 202. Here, a packet having a retransmission repetition number of 0 is the initial transmission packet. A packet having a retransmission repetition number of 1 is a retransmission packet that is transmitted subsequent to the initial transmission packet. Based on the information indicating the retransmission repetition number, the detection order determination unit 207 determines order of a code channel from which the interference cancellation unit 208 detects a signal, and notifies the interference cancellation unit 208 of the order. That is, the detection order determination unit 207 determines order of detecting the initial transmission packet and the retransmission packet from the signal received by the reception unit 202 according to the retransmission repetition numbers of the initial transmission packet (the initial transmission signal) and the retransmission packet (the retransmission signal) included in the signal received by the reception unit 202. The order determination by the detection order determination unit 207 will be described in detail later.

The GI removal unit 204 removes the GI (Guard Interval) from the data signal included in the received signal converted into the digital signal by the reception unit 202. The FFT unit 205 converts an output signal of the GI removal unit 204 into a frequency domain signal by performing an FFT process on the output signal. The interference cancellation unit (signal detection unit) 208 detects a coded bit log likelihood ratio (LLR) of an information bit sequence from the signal output from the FFT unit 205 while referring to the propagation channel estimation value output from the propagation channel estimation unit 203 according to the detection order determined by the detection order determination unit 207, and outputs the detected coded bit LLRs and an information bit sequence, which is hard decision result for the coded bit LLR, and performs error detection on the coded bit LLR to output the error detection result. Details of the operation of the interference cancellation unit 208 will be described later. Here, the coded bit LLR is a log of probability of each coded bit being "1" and probability of each coded bit being "0."

The received signal storage unit 209 stores a soft decision value for the information bit sequence obtained by the demodulation process performed on the received signal in the interference cancellation unit 208. The soft decision value includes, for example, the coded bit LLR. Further, when the interference cancellation unit 208 performs the detection process on the retransmission packet signal, the received signal storage unit 209 outputs at least one soft decision value for a packet received earlier than the retransmission packet to the interference cancellation unit 208 (more specifically, the combining unit 711, which will be described below). For example, when the $p^{th}$ retransmission packet is received, the received signal storage unit 209 may output the coded bit LLR of the first received packet (initial transmission packet) or may output coded bit LLRs of the first to $(p-1)^{th}$ received packets.

The response signal generation unit 210 receives the error detection result output by the interference cancellation unit 208, generates a data sequence including control data indicating presence or absence of the packet error according to the error detection result, and performs signal processing such as error correction coding and data modulation to generate a response signal. The transmission unit 211 converts the response signal into an analog signal (D/A conversion) and into a frequency band for transmission (radio frequency band), and transmits the resultant response signal from the antenna unit 201.

A scheme of communicating the response signal by the response signal generation unit 212 may be any scheme of enabling the packet transmission device 100 having received the response signal to recover (demodulate and decode) an original response signal, such as OFDM or a single-carrier modulation scheme. When a signal indicating "the absence of the packet error" is input as the error detection result from the interference cancellation unit 208, the response signal generation unit 210 generates the receipt notification ACK, as a response signal indicating that reception is accurately completed, to the packet transmission device 100. When a signal indicating "the presence of the packet error" is input as the error detection result from the interference cancellation unit 208, the response signal generation unit 210 generates the non-receipt notification NACK, as a response signal to request packet retransmission, to the packet transmission device 100.

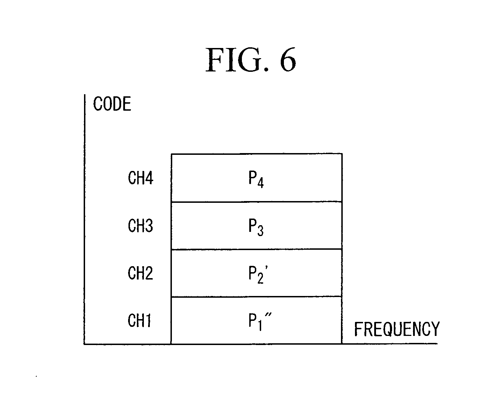

Next, an operation in which the interference cancellation unit 208 of the packet reception device 200 detects each packet by removing an interference component from the code-multiplexed signal received by the reception unit 202 using a detected signal for each packet according to the order determined by the detection order determination unit 207 based on the information indicating the retransmission repetition number will be described. Here, it is assumed that a code multiplex number N is equal to 4, each of the code channel signal generation units 101-1 to 101-4 of the packet transmission device 100 generates a signal of one packet among packets packet P1", P2', P3 and P4, and the packet transmission device 100 transmits a signal obtained by code-multiplexing the signals of the packets as shown in FIG. 6. In this case, the packet transmission device 100 transmits a retransmission control signal indicating the retransmission repetition number of the packets P1", P2', P3 and P4 along with the packet signals.

Here, the packet P1" is the second retransmission packet of the initial transmission packet P1 (q=2, where q denotes the retransmission repetition number), and is generated by the code channel signal generation unit 101-1 and transmitted using a code channel CH1 multiplied by a spreading code C1. The packet P2' is the first retransmission packet of the initial transmission packet P2 (q=1), and is generated by the code channel signal generation unit 101-2 and transmitted using a code channel CH2 multiplied by a spreading code C2. The packet P3 is the initial transmission packet (q=0) and is generated by the code channel signal generation unit 101-3 and transmitted using a code channel CH3 multiplied by a spreading code C3. The packet P4 is the initial transmission packet (q=0), and is generated by the code channel signal generation unit 101-4 and transmitted using a code channel CH4 multiplied by a spreading code C4.

The puncturing units 124 of the packet transmission device 100 alternately use pattern 1 and pattern 2 of the puncturing pattern shown in FIG. 4. For example, the puncturing unit 124 performs the puncturing process in the pattern 1 of FIG. 4 in even retransmission packet transmissions (including the initial transmission packet, q=0, 2, ...) and in pattern 2 of FIG. 4 in odd retransmission packet transmissions (q=1, 3, ...).

First, the reception unit 202 of the packet reception device 200 receives the signal transmitted by the above-described packet transmission device 100 via the antenna unit 201. The received packet management unit 206 acquires the information indicating the retransmission repetition number of a packet of each code-multiplexed signal from the retransmission control signal included in the received signal. Here, since the signals of the packets P1", P2', P3 and P4 are multiplexed in the received signal as described above, the received packet management unit 206 obtains information indicating that the packets $P_3$ and $P_4$ are the $0^{th}$ retransmission packet (the initial transmission packets), the packet $P_2$' is the first retransmission packet (the retransmission packet), and the packet P1" is the second retransmission packet (the retransmission packet).

Based on the information indicating the retransmission repetition number, the detection order determination unit 207 determines a detection order to enable a signal of a code channel including a packet having a great retransmission repetition number to be first detected in order. In the case of FIG. 6, the order is determined to enable the code channel CH1 of the retransmission packet P1" having a great retransmission repetition number among the retransmission packets to be first detected, the code channel CH2 of the retransmission packet P2' having a next great retransmission repetition number to be then detected, and the code channel CH3 of the initial transmission packet P3 and the code channel CH4 of the initial transmission packet P4 having the retransmission repetition number of 0 to be lastly detected.

As described above, the interference cancellation unit 208 preferentially performs the signal detection process on a packet having a great retransmission repetition number, removes, from the received signal, the interference replica resulting from the retransmission packet detection signal, which is the result of the signal detection process, and performs the signal detection process on a packet having a next great retransmission repetition number. The packet having a great retransmission repetition number has a number of previously received packets, which can be combined, related to the retransmission packet stored in the received signal storage unit 209. As a packet has a number of signals that can be combined, the signal detection accuracy in the interference cancellation unit 208 is good. A packet signal having good signal detection accuracy is first detected, an interference replica resulting from the detected packet signal is removed from the received signal, and then a packet having low signal detection accuracy (a packet having a small retransmission repetition number) is detected, thereby improving the detection accuracy of the packet signal having low signal detection accuracy.

The retransmission packets having the same retransmission repetition number (e.g., the above-described packets P3 and P4) may have any detection order. For example, such retransmission packets may be simultaneously detected, or the detection order may be determined using another criterion such as a spreading code sequence or a signal to interference plus noise ratio (SINR).

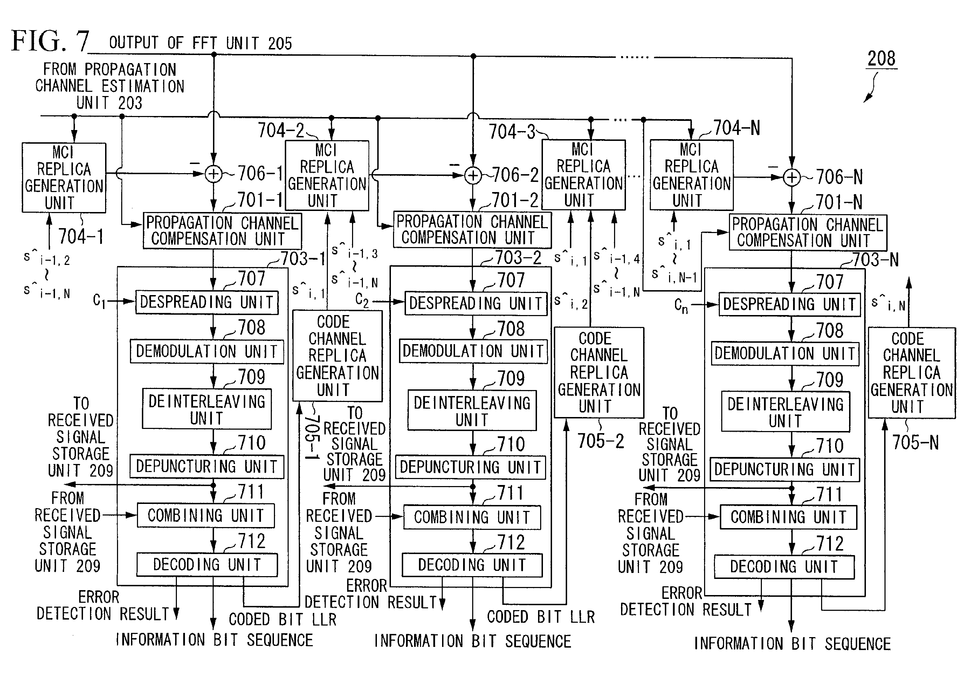

FIG. 7 is a schematic block diagram showing a configuration example of the interference cancellation unit 208 which performs successive iterative interference cancellation. The interference cancellation unit 208 sets a code channel parameter, such as a spreading code, to each part constituting the interference cancellation unit 208 so that the signals of the code channels are detected in the order determined by the detection order determination unit 207. The interference cancellation unit 208 includes propagation channel compensation units 701-1 to 701-N, code separation units 703-1 to 703-N, MCI replica generation units 704-1 to 704-N, code channel replica generation units 705-1 to 705-N, and subtraction units 706-1 to 706-N. Here, N denotes a maximum value of a code multiplex number that can be received.

Each of the code separation units 703-1 to 703-N includes a despreading unit 707, a demodulation unit 708, a deinterleaving unit 709, a depuncturing unit 710, a combining unit 711, and a decoding unit 712. A series of processes in the interference cancellation unit 208 is iteratively performed by a previously determined number of iterations. That is, when a signal of the code multiplex number N is received, the interference cancellation unit 208 performs an iterative process in which a series of processes of performing interference cancellation in any of the subtraction units 706-1 to 706-N, propagation channel compensation in any of the propagation channel compensation units 701-1 to 701-N, and code channel separation in any of the code separation units 703-1 to 703-N, code channel replica generation in any of the code channel replica generation units 705-1 to 705-N, and interference replica generation in the MCI replica generation units 704-1 to 704-N on each of first to $N^{th}$ code channels is iterated by the number of iterations.

The interference cancellation unit 208 sets a parameter of each unit based on the order determined by the detection order determination unit 207. For example, in FIG. 7, when the reception unit 202 receives the signal shown in FIG. 6, N=4, and signals of code channels (packets) are detected in order of code channels CH1, CH2, CH3, and CH4 (order of packets P1", P2', P3, and P4) determined by the detection order determination unit 207 based on the example shown in FIG. 6, and interference is removed therefrom. In this case, the interference cancellation unit 208 sets the spreading code sequence $C_1$ of the code channel CH1 for the code separation unit 703-1 and the code channel replica generation unit 705-1, the spreading code sequence $C_2$ of the code channel CH2 for the code separation unit 703-2 and the code channel replica generation unit 705-2, the spreading code sequence $C_3$ of the code channel CH3 for the code separation unit 703-3 and the code channel replica generation unit 705-3, and the spreading code sequence $C_4$ of the code channel CH4 for the code separation unit 703-4 and the code channel replica generation unit 705-4. For the puncturing patterns, corresponding puncturing patterns of the code channels are set based on the detection order. Each unit of the interference cancellation unit 208 will be described in detail later.

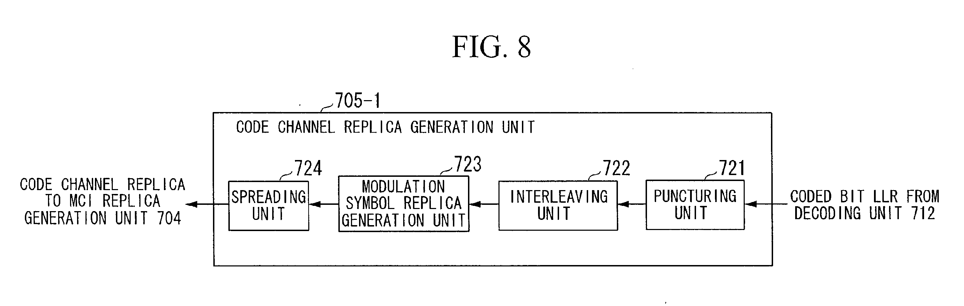

FIG. 8 is a schematic block diagram showing a configuration of the code channel replica generation unit 705-1. The code channel replica generation units 705-2 to 705-N have the same configuration as the code channel replica generation unit 705-1, as described below. The code channel replica generation unit 705-1 has a puncturing unit 721, an interleaving unit 722, a modulation replica generation unit 723, and a spreading unit 724, and generates a replica of a code channel corresponding to a spreading code input to the spreading unit 724 among spreading codes $C_1 \cdots C_N$ based on the detection order determined by the detection order determination unit 207.

That is, the code channel replica generation unit 705-1 generates a code channel replica based on coded bit LLRs output each time the code separation unit 703-1 of FIG. 7 detects a signal of a code channel corresponding to a spreading code input to the despreading unit 707 among the spreading codes $C_1$ to $C_N$. Similarly, the code channel replica generation units 705-2 to 705-N respectively generate code channel replicas based on coded bit LLRs output by the code separation units 703-2 to 703-N. Here, the coded bit LLR is an LLR of each bit coded by the error correction code of the encoding unit 111.

The puncturing unit 721 performs a puncturing process on the LLRs of coded bits, which are output signals from the decoding unit 711 using the same pattern as a puncturing pattern applied for each code channel (packet) by the puncturing unit 124 of the packet transmission device 100 as a packet transmission source. The interleaving unit 722 performs a process of rearranging the bit arrangement of an output signal from the puncturing unit 721 using the same pattern as an interleaving pattern applied for each code channel (packet) by the interleaving unit 112 of the packet transmission device 100.

The modulation symbol replica generation unit 723 generates a modulation symbol replica by modulating an output signal from the interleaving unit 622 in the same modulation scheme as that of the modulation unit 113, such as QPSK modulation or 16QAM modulation. The process in the modulation symbol replica generation unit 623 will be described in which the QPSK modulation is used by way example. When the LLRs of bits forming a QPSK modulation symbol are $\lambda(b_0)$ and $\lambda(b_1)$, the modulation symbol replica generation unit 723 generates a QPSK modulation symbol replica using Equation (2).

$$\frac{1}{\sqrt{2}} \tanh\left(\lambda(b_0)/2\right) + \frac{j}{\sqrt{2}} \tanh\left(\lambda(b_1)/2\right) \qquad (2)$$

Here, j denotes an imaginary unit. Even in another modulation scheme such as 16QAM, a symbol replica may be generated in the same principle.

The spreading unit 724 copies the modulation symbol replica output from the modulation symbol replica generation unit 723 by a spreading factor of the spreading codes $C_1 \cdots C_N$, multiplies the resultant replica by the spreading code in the code channel of the code channel replica generated by the spreading unit 724 among the spreading codes $C_1 \cdots C_N$ to generate code channel replicas (data signal replicas).

Next, operations of the MCI replica generation units 704-1 to 704-N, the subtraction unit 706, the propagation channel compensation unit 701 and the code separation units 703-1 to 703-N when the reception unit 202 receives the signal shown in FIG. 6 and the detection order determination unit 207 detects the code channels in order of code channels CH1, CH2, CH3, and CH4 according to the determined detection order, and removes the interference will be sequentially described with reference to FIG. 7.

First, since the code separation unit 703-1 detects a signal from the first detected code channel CH1 in an $i^{th}$ iteration of the iterative process in the interference cancellation unit 208, the MCI replica generation unit (interference replica generation unit) 704-1 generates an MCI replica, which is a replica of a component serving as interference to the code channel CH1, by code-multiplexing replica signals $\hat{S}_{i-1, 2}$ to $\hat{S}_{i-1, 4}$ of the code channels CH2 to CH4 generated by the code channel replica generation units 705-2 to 705-N in an i-1th iteration and multiplying the resultant signal by the propagation channel estimation values calculated by the propagation channel estimation unit 203.

Here, a replica signal $S^\wedge_{a, b}$ is a replica signal of a code channel having the bth detection order generated in the ath iteration of the iterative process. Since the (i-1)th iteration is absent in the first iterative process, i.e., when i=1, a corresponding value is regarded as being absent ("0") in the process.

Next, the subtraction unit 706-1 subtracts an MCI replica for the code channel CH1 generated by the MCI replica generation unit 704-1 from an output signal from the FFT unit 205.

The propagation channel compensation unit 701-1 multiplies a subtraction result of the subtraction unit 606-1 by a weight coefficient for compensating for propagation channel distortion calculated using a propagation channel estimation value calculated by the propagation channel estimation unit 203. Here, a minimum mean square error (MMSE) weight, an orthogonal restoration combining (ORC) weight, a maximum ratio combining (MRC) weight, or the like may be used as the weight coefficient.

Next, the despreading unit 707 of the code separation unit 703-1 performs a despreading process by multiplying the output signal from the propagation channel compensation unit 701-1 by a spreading code C1 unique to the code channel CH1 based on the detection order determined by the detection order determination unit 207, and detects a signal of the code channel CH1. Thereafter, the demodulation unit 708 performs a demodulation process on an output signal from the despreading unit 707 in the same modulation scheme as that of the transmitter, such as QPSK or 16QAM, and calculates a soft determination result of coded bits, for example, coded bit LLRs that are log likelihood ratios of each coded bit.

A demodulation process of the demodulation unit 608 will be described in which a modulation scheme is QPSK and coded bit LLRs are calculated as a soft determination result. In this description, it is assumed that a QPSK symbol transmitted at the transmitter, that is, a modulation result by the modulation unit 113 of FIG. 1, is X and a symbol after despreading at the receiver, that is, a result of despreading by the despreading unit 607, is Xc. When bits forming the modulation result X are bo, $b_1$ ($b_0$, $b_1 = \pm 1$), the modulation result X may be expressed by Equation (3). Here, j denotes an imaginary unit. $\lambda(b_0)$ and $\lambda(b_1)$ as LLRs of the bits $b_0$ and $b_1$ are calculated from an estimation value Xc of the modulation result X at the receiver, as in Equation (4).

$$X = \frac{1}{\sqrt{2}}\left(b_0 + jb_1\right) \qquad (3)$$

$$\lambda(b_0) = \frac{2\,\mathrm{Re}(X_c)}{1 - \mu} \qquad (4)$$

Here, Re() indicates a real part of a complex number. $\mu$ is an equivalent amplitude after propagation channel compensation. For example, if the propagation channel estimation value in a kth subcarrier is H(k) and a multiplied propagation channel compensation weight of an MMSE criterion is W(k), $\mu$ is W(k)H(k). For $\lambda(b_1)$, a real part and an imaginary part of $\lambda(b_0)$ may be replaced (in Equation (4), Re() is substituted by Im(). Here, Im() denotes an imaginary part of the complex number). It may be calculated based on the same principle even in another modulation scheme such as 16QAM, rather than QPSK. The demodulation unit 608 may calculate a hard determination result, not a soft determination result.

Next, the deinterleaving unit 709 rearranges a bit arrangement for the coded bit LLR output by the demodulation unit 708, for reverse operation of interleaving performed by the interleaving unit 112 of the packet transmission device 100 of the transmission source. The depuncturing unit 710 performs a depuncturing process on the coded bit LLR whose bit arrangement has been rearranged by the deinterleaving unit 709 using a puncturing pattern for the second retransmission packet that is a retransmission repetition number of the packet P1" of the code channel CH1 according to the detection order determined by the detection order determination unit 207, and outputs the resultant the coded bit LLR to the combining unit 711 and the received signal storage unit 209.

The operation of the depuncturing unit 110 will be described in detail. First, it is assumed that a coded bit sequence output by the error correction encoding unit 122 of the packet transmission device 100 is "x1, z1, z1', x2, z2, z2', x3, z3, z3', x4, z4, z4', x5, z5, z5', x6, z6, and z6' " and the puncturing unit 124 performs a puncturing process of interleaving bits using pattern 1 of FIG. 4 and outputs a coded bit sequence "x1, z1, x2, x3, x4, z4', x5, and x6." It is also assumed that coded bit LLRs as an output of the deinterleaving unit 609 corresponding to a coded bit sequence output by the puncturing unit 124 transmitted by the packet transmission device 100 are "$x_{r_2}1$, $z_{r_2}1$, $x_{r_2}2$, $x_{r_2}3$, $x_{r_2}4$, zr24', $x_{r_2}5$, and $x_{r_2}6$."

In this case, the depuncturing unit 710 inserts virtual values into bit positions corresponding to z1', z2, z2', z3, z3', z4, z5, z5', z6, and z6' punctured by the puncturing unit 124 of the transmission source to the coded bit LLRs "$x_{r_2}1$, $z_{r_2}1$, $x_{r_2}2$, $x_{r_2}3$, $x_{r_2}4$, $z_{r_2}4'$, $x_{r_2}5$, $x_{r_2}6$." If an intermediate value of the LLR, "0" is used as the virtual value, coded bit LLRs output by the depuncturing unit 710 become "$x_{r_2}1$, $z_{r_2}1$, 0, $x_{r_2}2$, 0, 0, $x_{r_2}3$, 0, 0, $x_{r_2}4$, 0, $z_{r_2}4'$, $x_{r_2}5$, 0, 0, $x_{r_2}6$, 0, 0."

Next, the combining unit 711 combines the output signal of the depuncturing unit 710 and the previously received packet from the received signal storage unit 209. Here, since the retransmission packet P1" is the second retransmission packet, the combining unit 711 combines the output signal of the depuncturing unit 710, i.e., the detected signal of the retransmission packet P1" and the initial transmission packet P1 for the retransmission packet P1" and the output signal for the first retransmission packet P1' (a signal detected from the previously received signal including at least one related packet received earlier than the retransmission packet P1) among the output signals (coded bit LLRs) of the depuncturing unit 710 previously received and stored in the received signal storage unit 209, and outputs the combining result to the decoding unit 712. The signal output to the decoding unit 712 is a detected signal for the retransmission packet P1" used for removal of the interference component by the interference cancellation unit 208. Here, a related packet (related signal) of the retransmission packet (retransmission signal) is the initial transmission packet of the retransmission packet or the retransmission packet of the initial transmission packet of the retransmission packet, excluding the retransmission packet itself.

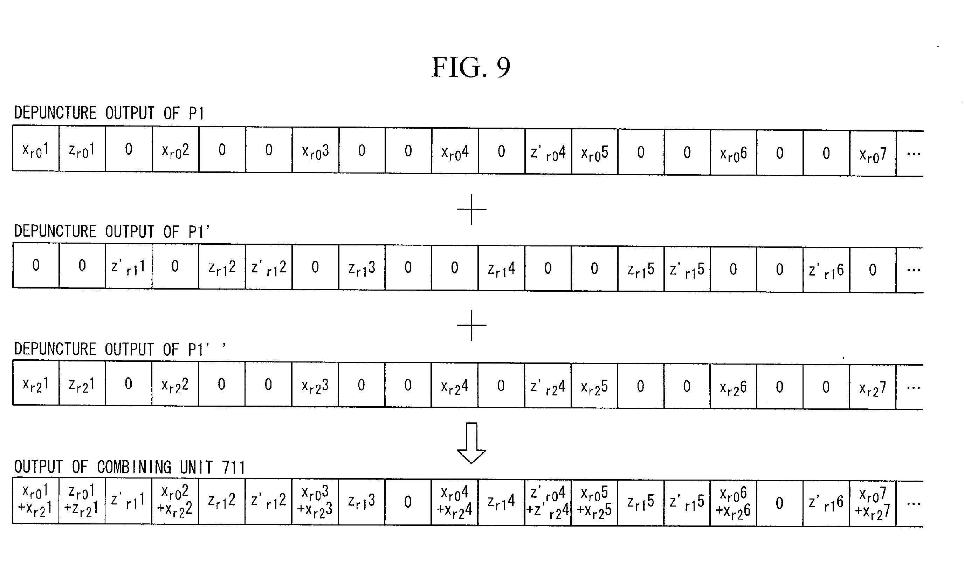

FIG. 9 shows an example of the combining process in the combining unit 711. In the example shown in FIG. 9, operation of the combining unit 711 when a depuncturing output (third from the top of FIG. 9) of the retransmission packet P1" output from the depuncturing unit 710, a depuncturing output (first from the top) of the initial transmission signal P1 of the retransmission packet P1" stored in the received signal storage unit 209, and a depuncturing output (second from the top) of the first retransmission signal P1' are combined is shown.

As shown in FIG. 9, the combining unit 711 combines a coded bit LLR "$x_{r_0}1$, $z_{r_0}1$, 0, $x_{r_0}2$, 0, 0, ..." that is a depuncturing output of the initial transmission signal P1, a coded bit LLR "0, 0, $z'_{r_1}1$, 0, $z_{r_1}2$, $z'_{r_1}2$, ..." that is a depuncturing output of the retransmission packet P1', and a coded bit LLR "$x_{r_2}1$, $z_{r_2}1$, 0, $x_{r_2}2$, 0, 0, ..." that is a depuncturing output of the retransmission packet P1" , that is, sums the respective bits, and outputs the resultant coded bit LLR "$x_{r_0}1 + x_{r}21$, $z_{r_0}1 + z_{r_2}1$, $z'_{r_1}1$, $x_{r_0}2 + x_{r_2}2$, $z_{r_1}2$, $z'_{r_1}2$, ...."

Here, the depuncturing unit 710 depunctures the initial transmission packet P1 and the retransmission packet P1" using pattern 1 and depunctures the retransmission packet P1' using pattern 2. Further, when the depuncturing unit 710 outputs the coded bit LLR of the initial transmission packet, the combining unit 210 outputs the coded bit LLR as it is.

Referring back to FIG. 7, the decoding unit 712 then performs an error correction decoding process corresponding to error correction coding such as turbo coding and convolutional coding performed by the error correction encoding unit 122 of the packet transmission device 100 of the transmission source on the coded bit LLR output by the combining unit 711, and outputs the error corrected coded bit LLR. Here, since the code separation unit 703-1 separates the code channel CH1, code channel replica generation unit 705-1 generates the replica signal of the code channel CH1 using the coded bit LLR of the code channel CH1 from the decoding unit 711 of the code separation unit 703-1.

Further, the decoding unit 712 performs an error detection process on the packet using error detection code such as cyclic redundancy check (CRC) applied to each packet by the error detection encoding unit 121 of the packet transmission device 100 of the transmission source, and inputs the error detection result to the response signal generation unit 210. Further, the error detection result is input to the decoding unit 712 of the code separation unit 703-N that performs signal detection of the last code channel. The decoding unit 712 of the code separation unit 703-N having received the input terminates the iterative process (stops the output to the code channel replica generation unit 705-N) when all error detection process results including the decoding unit 712 indicate no error or when the iteration number of the iterative process counted by the decoding unit 712 reaches a previously determined iteration number (maximum number). Among the decoding units 712, the decoding unit 712 for which the error detection process result indicates no error outputs an information bit sequence excluding a redundant bit for error detection from the bit sequence generating a packet that is a hard decision result of the coded bit LLR of the error correction decoding result by the decoding unit 712.

As described above, the interference cancellation unit 208 detects a signal of the code channel CH1 according to the order determined by the detection order determination unit 207, and then detects signals in order of the code channels CH2, CH3, and CH4 using a replica generated from the earlier detected signal of the code channel. Code channel replicas input to the MCI replica generation units 704 are different between an MCI replica generation process for the code channels CH2, CH3, and CH4 described below and an MCI replica generation process for the code channel CH1.

When the code separation unit 703-2 detects a signal of the code channel CH2 in the ith iteration of the iterative process in the interference cancellation unit 208, the MCI replica generation unit 704-2 generates an MCI replica serving as interference to the code channel CH2 by code-multiplexing a replica signal $S^{\wedge}_{i, 1}$ of the code channel CH1 generated in the $i$th iteration with replica signals $S^{\wedge}_{i-1,\,3}$ and $S^{\wedge}_{i-1,\,4}$ of the code channels CH3 and CH4 generated in the i-1th iteration and multiplying the resultant signal by a propagation channel estimation value.

Similarly, when the code separation unit 703-3 detects a signal of the code channel CH3, the MCI replica generation unit 704-3 generates an MCI replica serving as interference to the code channel CH3 by code-multiplexing replica signals $S^{\wedge}_{i,\,1}$ and $S^{\wedge}_{i,\,2}$ of the code channels CH1 and CH2 generated in the $i$th iteration with a replica signal $S^{\wedge}_{i-1,\,4}$ of the code channel CH4 generated in the i-1th iteration and multiplying the resultant signal by a propagation channel estimation value. When the code separation unit 703-4 detects a signal of the code channel CH4, the MCI replica generation unit 704-4 generates an MCI replica serving as interference to the code channel CH4 by code-multiplexing replica signals $S^{\wedge}_{i,\,1}$ to $S^{\wedge}_{i,\,3}$ of the code channels CH1 to CH3 generated in the $i$th iteration and multiplying the resultant signal by a propagation channel estimation value.

As described above, each time signal detection of any one code channel corresponding to the code channels CH1 to CH4 is terminated based on the detection order by the detection order determination unit 207, a code channel replica generation unit corresponding to a signal-detected code channel generates (updates) a code channel replica, and the MCI replica generation unit generates an MCI replica used in an interference cancellation process for a code channel to be detected the next time, using the generated (updated) code channel replica. In the $i$th iteration, the MCI replica generation unit 704 calculates an MCI replica $R^{\wedge}_{i,\,u}$ used for the interference cancellation process upon detection of a $u$th code channel that is $u$th in the detection order by the detection order determination unit 207 by the following Equation (5).

$$\hat{R}_{i,u} = H\left( \sum_{n=1}^{u-1} \hat{S}_{i,n} + \sum_{n=u+1}^{N} \hat{S}_{i-1,n} \right) \qquad (5)$$

Here, H is a propagation channel estimation value and N is the number of multiplexed code channels. Since the $_{i-1}$th code channel replica $S^{\wedge}_{i-1,\,n} = S^{\wedge}_{0,\,n}$ may not be generated when i=0 in the above-described interference cancellation unit 208 as the successive iterative interference canceller, MCI replica generation units 704-1 to 704-N generate an MCI replica only using a code channel replica capable of being generated when i=1.

The deinterleaving unit 709 and the depuncturing unit 710 perform processing according to a pattern corresponding to each code channel, set according to the detection order by the detection order determination unit 207. The despreading unit 707 multiplies a spreading code sequence multiplied upon transmission unique to each code channel, set according to the detection order by the detection order determination unit 207.

While the case in which interference cancellation (code channel signal detection) is sequentially performed on code channels one by one based on the retransmission repetition number of packets forming code channels has been described in this embodiment, code channels may be grouped based on the retransmission repetition number of packets and interference cancellation may be sequentially performed on each group. For example, grouping may be performed by whether a code channel is an initial transmission packet or a retransmission packet. When the grouping is performed in this manner, an interference replica is generated using the retransmission packet signal among the detected signals when the initial transmission packet signal is detected, and an interference component is removed.

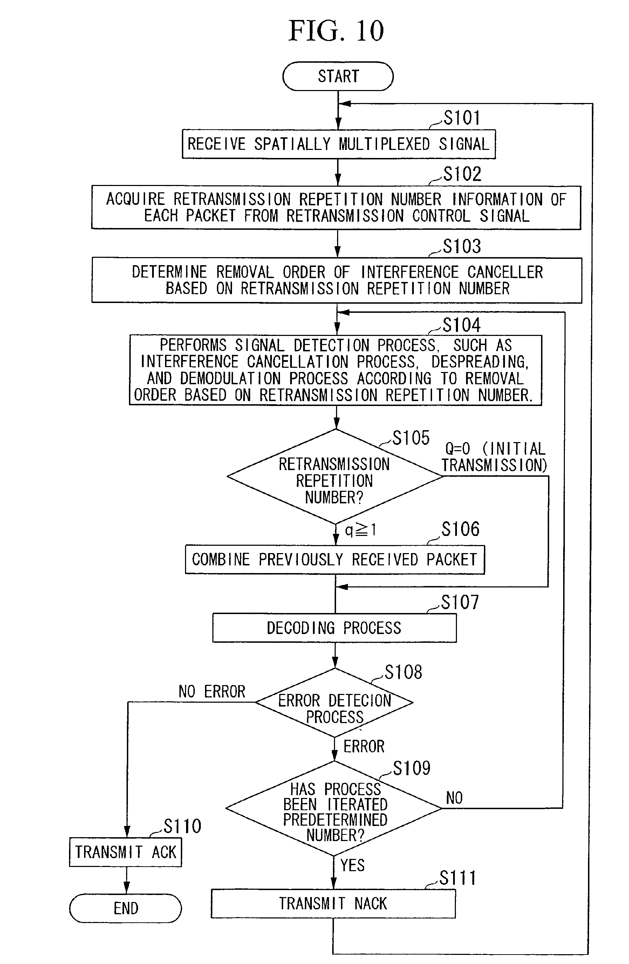

FIG. 10 is a flowchart illustrating operation of the packet reception device 200. If the packet reception device 200 receives a code-multiplexed signal (S101), the received packet management unit 206 of the packet reception device 200 acquires retransmission repetition number information of a packet forming each code channel from a retransmission control signal included in the received signal (S102). The detection order determination unit 207 determines a signal detection order (interference signal removal order) of a packet (code channel) to detect a signal by canceling interference from the retransmission repetition number information acquired by the received packet management unit 206 (S103).

According to the signal detection order determined in step S103, the interference cancellation unit 208 performs a packet (code channel) cancellation process such as MCI replica subtraction, despreading, and demodulation processes, and a signal detection process (S 104). Next, the combining unit 711 determines the retransmission repetition number to check how many a packet to be detected is retransmitted (S105). When the packet is an initial transmission packet (retransmission repetition number q=0), the combining unit 711 inputs the packet to the decoding unit 712 without performing the combining process. When the packet is a retransmission packet (q≥1), the combining unit 711 calls for a previously received signal for the detected signal stored in the received signal storage unit 209, and performs the combining process (S106).

The decoding unit 712 performs a decoding process on the output signal from the combining unit 711 (S107), and determines whether a signal-detected packet has an error (S108). When determines that there is no error, the response signal generation unit 210 returns a response signal indicating absence of an error to the packet transmission device 100(S110). When in step S108, the decoding unit 712 determines that the packet has an error, it is determined whether the iterative process of interference cancellation unit 208 is repeated until a predetermined iteration number (S109). When it is determined that the process is not repeated until the iteration number, the decoding unit 712 outputs the coded bit LLR and the interference cancellation unit 208 returns to step S104, in which the iteration is performed again. On the other hand, when it is determined in step S109 that the process is repeated until the iteration number, the response signal generation unit 210 sends a response signal to the packet transmission device 100 to request retransmission (S111), and returns to step S101 in which the next signal is received.

Only the process for the specific packet in interference cancellation unit 208 in steps S104 to S108 has been described. However, specifically, the interference cancellation unit 208 performs steps S104 to S107 on each packet according to the determined detection order of the detection order determination unit 207, and when it is determined in step S108 that there is no error in all the packets, the response signal generation unit 210 sends a response signal indicating no error in all the packets to the packet transmission device 100 (S110).

On the other hand, when it is determined in step S108 that any packet has an error, and as a result, the iteration is performed a predetermined number (S 109-Yes), the response signal generation unit 210 sends a response signal indicating no error to the packet transmission device 100, for a packet from which an error has not been detected in step S108, and sends a response signal to the packet transmission device 100 to request retransmission, for the packet from which the error has been detected (S111).

While, in the present embodiment, the interference cancellation unit 208 performs the iterative process to iteratively perform the signal detection of the code-multiplexed code channel on the signal of each code channel several times, the interference cancellation unit 208 may perform only the first process in the iterative process, i.e., the detection of the signal of each code channel on each code channel once without the iteration.

Thus, in the present embodiment, the detection order determination unit 207 of the packet reception device 200 determines the order of signal detection to enable a packet having a greater retransmission repetition number among the code-multiplexed packets to be first detected, and the interference cancellation unit 208 detects a signal of the packet having a greater retransmission repetition number according to the signal detection order, removes an interference component resulting from the detected signal, and then performs signal detection on packets having a next great retransmission repetition number in order. Thus, a packet having a great retransmission repetition number and a number of signals to be combined, i.e., a signal of a packet having high signal detection accuracy in the interference cancellation unit 208 is first detected, an interference replica resulting from the detected packet signal is removed from the received signal, and then a packet having a smaller retransmission repetition number is detected, such that the retransmission repetition number is small and the number of signals to be combined is small, thereby improving detection accuracy of a packet signal having low signal detection accuracy. Accordingly, it is possible to prevent delay from increasing due to a great retransmission repetition number of a specific packet.

[Second Embodiment]

In the first embodiment, the case in which the initial transmission packet and the retransmission packet of HARQ are code-multiplexed by the spreading codes and the MCI is removed by the SIC has been described. In a second embodiment, a communication system includes a packet transmission device 300 and a packet reception device 400. An initial transmission packet and a retransmission packet transmitted by the packet transmission device 300 are spatially multiplexed using multi-input multi-output (MIMO). The packet reception device 400 removes the other stream signal by the SIC. In the present embodiment, the case in which an OFDM scheme is applied as a packet transmission scheme will be described.

Here, the interference signal refers to the other spatially multiplexed signal. That is, for example, if signals $P_1$ and $P_2$ are spatially multiplexed, the signal $P_2$ is an interference signal to the signal $P_1$ and the signal $P_1$ is an interference signal to the signal $P_2$. An interference cancellation process is a process of removing a signal (replica) generated by regenerating an interference signal from the received signal. For example, when the signal $P_2$ is detected, a signal obtained by removing a replica of the signal $P_1$ from the received signal is used.

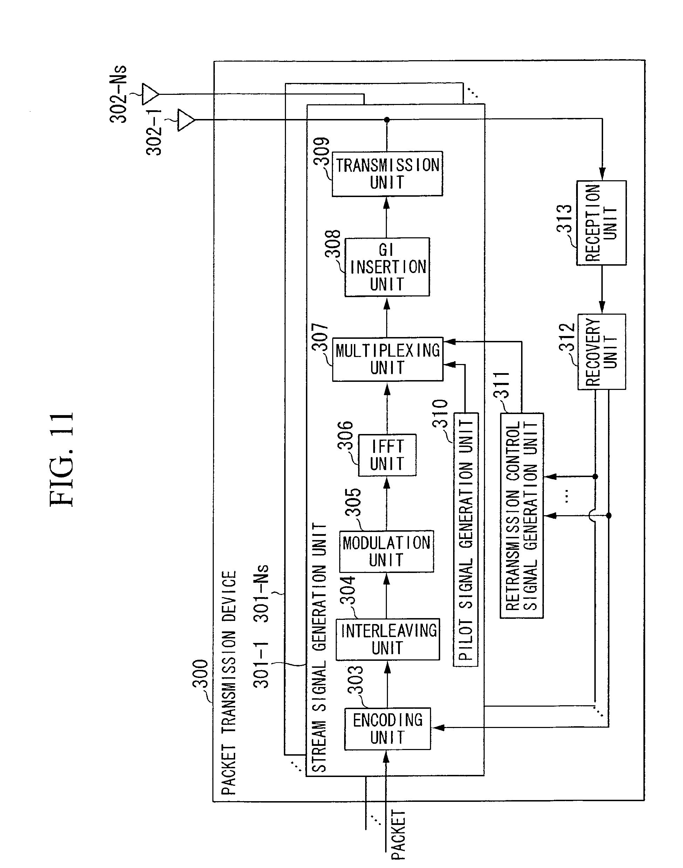

FIG. 11 is a schematic block diagram showing a configuration of the packet transmission device 300 according to the present embodiment. For example, the packet transmission device 300 is included in a base station in a downlink by a wireless communication system and in a mobile station in an uplink. Also, the packet transmission device 300 is included in a relay station in the downlink between the relay station and the mobile station. The packet transmission device 300 includes stream signal generation units 301-1 to 301-Ns (where Ns is the number of streams), antenna units 302-1 to 302-Ns, a retransmission control signal generation unit 311, a recovery unit 312 and a reception unit 313, and transmits Ns stream signals generated from other information bit sequences constituting each packet one by one from the antenna unit 302-1 to 302-Ns. Further, the packet transmission device 300 recovers a signal including a response signal from the packet reception device 400.

The reception unit 313 converts the signal from the packet reception device received via the antenna unit 302-1 into a frequency band in which a recovery process (a detection process) is possible, performs band limitation using a filtering process, and performs conversion from an analog signal into a digital signal (A/D conversion). The recovery unit 312 performs a received signal recovery process such as data demodulation and error correction decoding on the digital signal output by the reception unit 313, extracts a response signal included in the signal from the packet reception device 400, and notifies encoding units 303 and retransmission control signal generation units 311 in the stream generation units 301-1 to 301-Ns of packet reception success/failure information indicated by the response signal. Also, the recovery unit 312 has a function of processing the received signal based on a transmission scheme of the received signal. While the case in which the reception unit 312 has been described herein as receiving via the antenna unit 302-1, the reception unit 312 may receive via any one of the antenna units 302-2 to 302-Ns or may receive via from another dedicated antenna.

Each of the stream signal generation units 301-1 to 301-Ns generates a stream-specific transmission data signal from information bits forming the input packet, and includes an encoding unit 303, an interleaving unit 304, a modulation unit 305, an IFFT unit 306, a pilot signal generation unit 310, a multiplexing unit 307, a GI insertion unit 308, and a transmission unit 309.

The encoding unit 303 has a function of adding redundant bits to the information bit sequence of the input packet so that the packet reception device 400 can perform error detection and error correction, and includes an error detection encoding unit 121, an error correction encoding unit 122, a coded bit storage unit 123, and a puncturing unit 124, similar to the encoding unit 111 of the first embodiment shown in FIG. 2. The encoding units 303 outputs coded bits of the initial transmission packets or coded bits of the retransmission packets according to response signals from the packet reception device 400 to the stream signals (packet signals) output by the stream signal generation units 301-1 to 301-Ns. In the present embodiment, a packet is generated for each stream, and error detection coding and error correction coding are performed on each packet (each stream). That is, any packet signal is not transmitted in the form of being distributed over a plurality of streams, but transmitted in the same stream.

The interleaving unit 304 rearranges the bit arrangement of the coded bits output by the encoding unit 303 according to a previously determined pattern. The modulation unit 305 performs data modulation on the coded bits of the bit arrangement rearranged by the interleaving unit 304 using a modulation scheme such as QPSK or 16QAM, and generates a modulation symbol. A modulation scheme of data modulation may be different for each stream. The IFFT unit 306 allocates the modulation symbol from the modulation unit 305 to each subcarrier, performs frequency-to-time conversion, for example, by IFFT, and generates a time domain signal.

The multiplexing unit 307 multiplexes the time domain signal generated by the IFFT unit 306 with a pilot signal generated by the pilot signal generation unit 310 and a retransmission control signal generated by the retransmission control signal generation unit 311. Here, only the multiplexing unit 307 included in the stream signal generation unit 301-1 multiplexes the retransmission control signal. Each of the other multiplexing unit 307 included in the stream signal generation units 301-2 to 301-Ns multiplexes the above-described time domain signal with the above-described pilot signal. The pilot signal generation unit 310 generates a pilot signal used for propagation channel estimation of each stream signal at the receiver. Preferably, an orthogonal pilot signal is generated from each stream.

The retransmission control signal generation unit 311 determines the retransmission repetition number of a packet transmitted in each stream based on reception success/failure information of each packet from the recovery unit 312, and generates a retransmission control signal to notify the packet reception device 400 of the determined retransmission repetition number. That is, the retransmission control signal generation unit 311 generates a retransmission control signal in which the packet transmission number is incremented by 1 upon receipt of the success/failure information indicating packet reception failure, and generates a retransmission control signal indicating an initial transmission packet by setting the retransmission repetition number of the next packet transmitted using the same stream as the successfully received stream to "0" upon receipt of the success/failure information indicating packet reception success. Here, the retransmission control signal generation unit 311 is connected to the multiplexing unit 307 included in the stream signal generation unit 301-1 and is configured so that the retransmission control signal generated by the retransmission control signal generation unit 311 is multiplexed with a stream generated by the stream signal generation unit 302-1, but the present invention is not limited thereto. To enable multiplexing into another stream (or a plurality of streams) to be performed, the retransmission control signal generation unit 311 may be connected to the multiplexing unit 307 of any one of the other stream signal generation units 302-2 to 302-N, and configured so that the retransmission control signal is multiplexed into a stream generated by the stream signal generation unit. Also, the retransmission control signal generation unit 311 may generate a retransmission control signal including transmission parameters such as a data modulation scheme, a coding rate, and a spatial multiplex number (MIMO rank information). Here, the MIMO rank information is MIMO multiplexing information defined in the transmission antenna and the reception antenna.

The GI insertion unit 308 inserts a GI (Guard Interval) into the output signal of the multiplexing unit 307. The transmission unit 309 converts an output signal from the GI insertion unit 308 into an analog signal (D/A conversion), performs band limitation using a filtering process, and further performs conversion into a transmittable frequency band. The same process is performed in the stream signal generation units 301-2 to 301-Ns other than the stream signal generation unit 301-1, and output signals from the stream signal generation units are transmitted at the corresponding antenna units 302-2 to 302-Ns, so that the transmission device 300 transmits a signal in which the initial transmission packet or the retransmission packet is spatially multiplexed. Signals transmitted from the antenna units 302-1 to 302-Ns are referred to as streams 1 to Ns.

In the present embodiment, the case in which a retransmission packet is transmitted from the same stream and the same antenna as those for an initial transmission packet has been described, but the retransmission packet may be transmitted from a different antenna for each retransmission repetition number. Hereinafter, a retransmission packet will be described as being transmitted from the same stream and the same antenna as those for the initial transmission packet even in the description of the packet reception device 400.

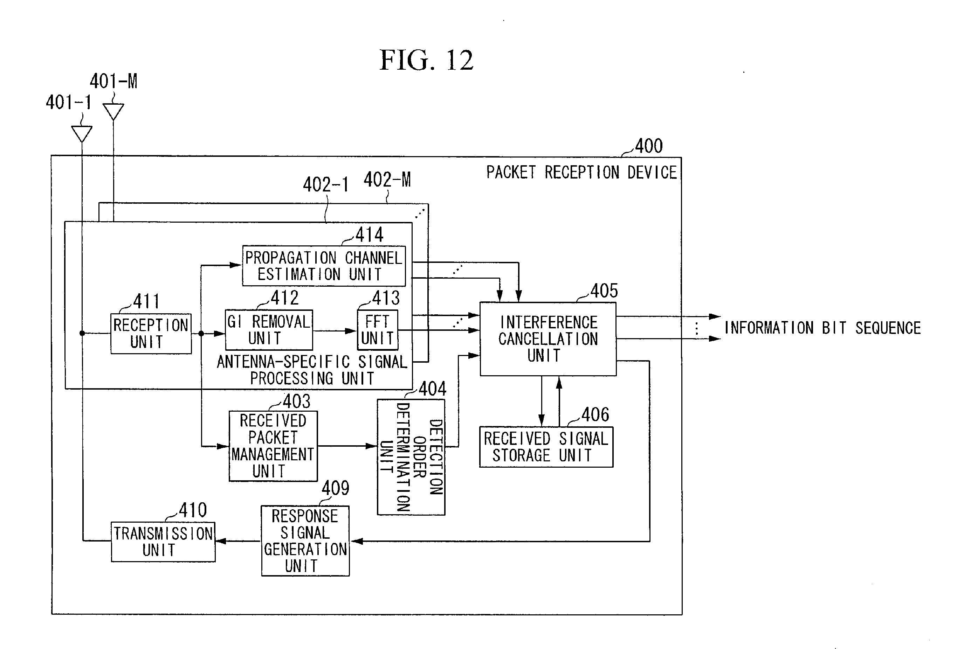

FIG. 12 is a schematic block diagram showing a configuration of the packet reception device 400 according to the present embodiment. For example, the packet reception device 400 is included in a mobile station in a downlink by a wireless communication system, and in a base station in an uplink. Also, the packet reception device 400 is included in a relay station in a downlink between the base station and the relay station.
The packet reception device 400 includes antenna units 401-1 to 401-M (where M is the number of reception antennas), antenna-specific signal processing units 402-1 to 402-M, a received packet management unit 403, a detection order determination unit 404, an interference cancellation unit 405, a received signal storage unit 406, a response signal generation unit 409, and a transmission unit 410.

The antenna-specific reception processing units 402-1 to 402-M receive and process signals received via the corresponding antenna units 401-1 to 401-M, and include reception units 411, GI removal units 412, FFT units 413, and propagation channel estimation units 414. While the antenna-specific reception processing unit 402-1 will be described herein, the antenna-specific reception processing units 402-2 to 402-M also have the same configuration as the antenna-specific reception processing unit 402-1, except that the corresponding antenna units are the antenna units 401-2 to 401-M and the antenna-specific reception processing units 402-2 to 402-M do not output a signal to the received packet management unit 403. The reception unit 411 converts a signal received from the packet transmission device 300 via the antenna unit 401-1 into a frequency band for signal processing such as a signal detection process, performs band limitation using a filtering process, and converts an analog signal into a digital signal (A/D conversion).

The propagation channel estimation unit 414 compares a pilot signal included in the digital signal converted by the reception unit 411 with a known pilot signal upon transmission in a corresponding unit, estimates a propagation channel characteristic between each of the antenna units 301-1 to 301-Ns of the packet transmission device 300 and the antenna unit 401-1 of the packet reception device 400, and outputs a propagation channel estimation value (such as a transfer function and an impulse response). Another signal such as a control channel or a preamble from which the propagation channel can be estimated may be used. The GI removal unit 412 removes a GI included in the digital signal converted by the reception unit 411. The FFT unit 413 converts a signal from which the GI removal unit 412 removes the GI, into a frequency domain signal by performing an FFT process. The same process is performed in the other antenna-specific reception processing units 402-2 to 402-M as well. A retransmission control signal may be received from any of the antenna units 402-1 to 402-M and output to the received packet management unit 403.

Here, in an MIMO system in which the number of transmission antennas and the number of reception antennas are N and M, respectively, a signal $R(k)$ in a $k^{th}$ subcarrier of the spatially multiplexed signal received by the packet reception device 400 may be expressed by Equation (6). Here, $H(k)$ is propagation channel characteristics between the transmission antennas and the reception antennas, and $S(k)$ is a transmission signal of each transmission antenna. That is, N elements $S_1(k)$, ..., $S_N(k)$ forming $S(k)$ are signals of the $k^{th}$ subcarriers of stream signals transmitted from the antennas 302-1, ..., 302-N of the packet transmission device 303. $N(k)$ is noise of each reception antenna, and $^T$ denotes a transpose matrix.

$$R(k) = H(k)S(k) + N(k) \qquad (6)$$

$$R(k) = \begin{bmatrix} R_1(k) & \cdots & R_M(k) \end{bmatrix}^T$$

$$H(k) = \begin{pmatrix} H_{11}(k) & \cdots & H_{1N}(k) \\ \vdots & \ddots & \vdots \\ H_{M1}(k) & \cdots & H_{MN}(k) \end{pmatrix}$$

$$S(k) = \begin{bmatrix} S_1(k) & \cdots & S_N(k) \end{bmatrix}^T$$

$$N(k) = \begin{bmatrix} N_1(k) & \cdots & N_M(k) \end{bmatrix}^T$$

The received packet management unit 403 extracts data for transmission parameters, such as information indicating the retransmission repetition number to check how many each stream transmitted from each of the antenna units 301-1 to 301-Ns of the transmission device 300 is retransmitted (including the initial transmission packet), a data modulation scheme, a coding rate, and a spatial multiplex number (MIMO rank information), from the retransmission control signal included in the received signal. The detection order determination unit 404 determines order according to which the interference cancellation unit 405 detects signals, based on the information indicating the retransmission repetition number extracted by the received packet management unit 403, and notifies the interference cancellation unit 405 of the order. Details of the order determination in the detection order determination unit 404 will be described later.

The interference cancellation unit (signal detection unit) 405 outputs the error detection result and an information bit sequence that a hard decision result of coded bit LLRs of packets respectively transmitted from the antenna units 301-1 to 301-N and the coded bit LLR from the frequency domain data signals output by the FFT units 413 of the antenna-specific reception processing units 402-1 to 402-M based on propagation channel estimation values output from the propagation channel estimation units 414 and the data for transmission parameters of each packet output from the received packet management unit 403, based on the detection order determined by the detection order determination unit 404. Details of the operation of the interference cancellation unit 405 will be described later.

Since the received signal storage unit 406 has the same functions as the received signal storage unit 209 of the first embodiment shown in FIG. 5 and stores Ns signals, where Ns denotes a stream number, whereas the received signal storage unit 209 in the first embodiment stores a signal of each code channel, the two embodiments differ in this point. The response signal generation unit 409 and the transmission unit 410 have the same function as the response signal generation unit 210 and the transmission unit 211 in the first embodiment.

Next, an example in which the detection order determination unit 404 determines the order to detect the spatially multiplexed signal using MIMO based on the information indicating the retransmission repetition number will be described. The case in which the packet transmission device 300 transmits signals using 4 transmission antennas of the antenna units 301-1 to 301-N (N=4) will be described. A transmission signal output from each of the antenna units 301-1 to 301-N (N=4) is referred to as a stream.

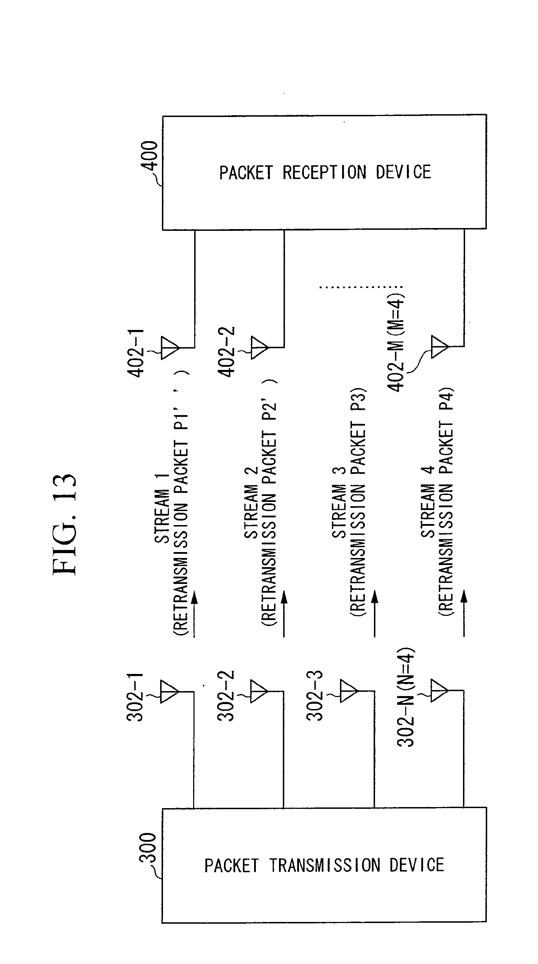

For example, the packet transmission device 300 simultaneously transmits stream 1 including a retransmission packet P1" from the antenna unit 302-1, stream 2 including a retransmission packet P2' from the antenna unit 302-2, stream 3 including an initial transmission packet P3 from the antenna unit 302-3, and stream 4 including an initial transmission packet P4 from the antenna unit 302-4 to the antennas 402-1 to 402-4 of the packet reception device 400, as shown in FIG. 13. That is, in Equation (6), N=4, M=4, the element $S_1(k)$ of the vector S(k) is a signal of the $k^{th}$ subcarrier of the retransmission packet P1", the element $S_2(k)$ is a signal of the $k^{th}$ subcarrier of the retransmission packet P2', the element $S_3(k)$ is a signal of the $k^{th}$ subcarrier of the retransmission packet P3, and the element $S_4(k)$ is a signal of the $k^{th}$ subcarrier of the retransmission packet P4. The packet reception device 400 receives a signal in which streams 1 to 4 are spatially multiplexed, via the antenna units 402-1 to 402-4. The transmission device 300 transmits a retransmission control signal indicating the retransmission repetition number of the packets P1", P2', P3 and P4 (retransmission repetition number q=2, 1, 0, and 0) along with the packets.

The packets P1" and P2' are assumed to be the second and first retransmission packets for the initial transmission packets P1 and P2, respectively. Further, the packet transmission device 300 is assumed to alternately use the puncturing patterns of FIG. 4 according to the retransmission repetition number. For example, the puncturing process is performed using pattern 1 of FIG. 4 in even retransmission packet transmissions (including the initial transmission packet, where retransmission repetition number q=0, 2, ...), and using pattern 2 of FIG. 4 in odd retransmission packet transmissions (including the initial transmission packet, where retransmission repetition number q=1, 3, ...).

The received packet management unit 403 of the packet reception device 400 acquires the retransmission repetition number of the packet transmitted by each stream from the retransmission control signal included in the signal received by the antenna-specific signal processing unit 402-1 via the antenna unit 401-1. Here, for example, packets P1", P2', P3 and P4 are transmitted in streams 1 to 4, respectively, as shown in FIG. 13, and the received packet management unit 403 obtains information indicating the packets P3 and P4 have a transmission number of 0 (initial transmission packet), the packet P2' has a transmission number of 1 (retransmission packet), and the packet P1" has a transmission number of 2 (retransmission packet) from the retransmission control signal.

Based on the information indicating the retransmission repetition number acquired by the received packet management unit 403, the detection order determination unit 404 determines a detection order to enable a stream transmitting a packet having a great retransmission repetition number to be first detected. In the case of FIG. 13, the detection order is determined to enable stream 1 including the retransmission packet P1" having a great retransmission repetition number to be first detected, stream 2 including the retransmission packet P2' having a next great retransmission repetition number to be then detected, and stream 1 and stream 2 including the initial transmission packets P1 and P2 having the retransmission repetition number of 0 to be lastly detected.

The interference cancellation unit 405 preferentially performs signal detection beginning with a stream transmitting a packet having a great retransmission repetition number according to the detection order determined by the detection order determination unit 404, removes an interference replica resulting from the detected signal of the packet having a great retransmission repetition number, and performs signal detection on a stream transmitting a retransmission packet having a next great retransmission repetition number. The packet having a great retransmission repetition number is a packet having a number of previously received packets related to the retransmission packet stored in the received signal storage unit 406 and has a number of signals that can be combined. When there are a number of signals that can be combined, the signal detection accuracy in the interference cancellation unit 405 is good. A packet signal having good signal detection accuracy is first detected, an interference replica resulting from the detected packet signal is removed from the received signal, and then a packet having low signal detection accuracy (a packet having a small retransmission repetition number) is detected, thereby improving the detection accuracy of the packet signal having low signal detection accuracy.

The detection order determination unit 404 may determine the detection order based on the retransmission repetition number of the packet forming the stream, or/and may determine the detection order based on a reception level, such as an SINR to enable a packet having a higher SINR to be first detected when packets have the same retransmission repetition number.

The detection order determination unit 404 may determine the order to enable packets of the stream are sequentially detected one stream by one stream (separate stream interference cancellation and MIMO spatial multiplexing) based on the retransmission repetition number of packets forming each stream, or may group streams based on the retransmission repetition number of packets and determine the order to sequentially detect packets of streams for each group. As an example of determining the order for each group, grouping may be performed based on whether the packet forming the stream is an initial transmission packet or a retransmission packet.

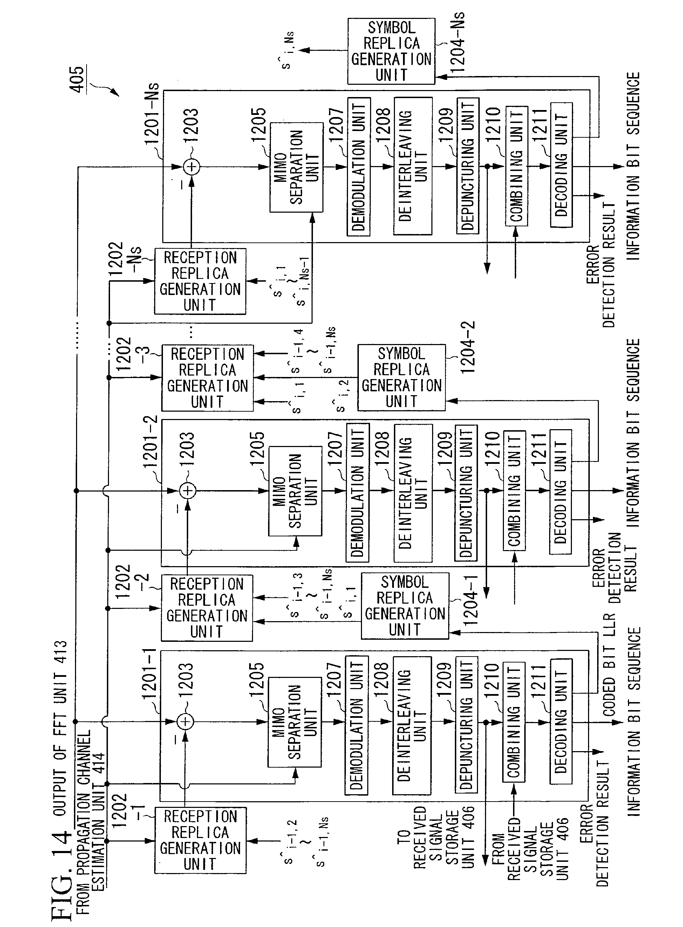

FIG. 14 is a schematic block diagram showing a configuration of the interference cancellation unit 405 which performs successive iterative interference cancellation on spatially multiplexed signals. The interference cancellation unit 405 successively detects the streams 1 to 4 in order from a spatially multiplexed signal including a stream 1 in which a packet P1" is transmitted from the antenna unit 302-1 by the packet transmission device 300 as shown in FIG. 13, a stream 2 in which the packet P2' is transmitted from the antenna unit 302-2, a stream 3 in which the packet P3 is transmitted from the antenna unit 302-3, and a stream 4 in which the packet P4 is transmitted from the antenna unit 302-4, based on the detection order of the streams 1 to 4 determined by the detection order determination unit 404. A series of processes (detection processes for the streams 1 to 4) in the interference cancellation unit 405 is iteratively performed by a previously determined number of times, except for the case in which all information bits can be detected without error on the way.

The interference cancellation unit 405 includes stream detection units 1201-1 to 1201-Ns, reception replica generation units 1202-1 to 1202-Ns, and symbol replica generation units 1204-1 to 1204-Ns, removes interference signal replicas from frequency domain data signals output by the FFT units 413 of the antenna-specific signal processing units 402-1 to 402-M, and performs processes of separation of spatially multiplexed streams, demodulation of each stream, combining and decoding.

The stream detection unit 1201-1 detects a signal of the stream 1 having the first detection order, the stream detection unit 1201-2 detects a signal of the stream 2 having the second detection order, the stream detection unit 1201-3 detects a signal of the stream 3 having the third detection order, and the stream detection unit 1201-Ns (Ns=4) detects a signal of the stream Ns having the Ns[th] detection order. The symbol replica generation unit 1204-1 generates a symbol replica of a signal forming the stream 1, the symbol replica generation unit 1204-2 generates a symbol replica of a signal forming the stream 2, the symbol replica generation unit 1204-3 generates a symbol replica of a signal forming the stream 3, and the symbol replica generation unit 1204-Ns (Ns=4) generates a symbol replica of a signal forming the stream Ns.

Each of the stream detection units 1201-1 to 1201-Ns includes a subtraction unit 1203, a MIMO separation unit 1205 (stream separation unit), a demodulation unit 1207, a deinterleaving unit 1208, a depuncturing unit 1209, a combining unit 1210, and a decoding unit 1211. The subtraction units 1203 subtract interference replicas (stream replicas) generated by the reception replica generation units 1202 from output signals of the FFT units 413 of the antenna-specific signal processing units 402-1 to 402-M. In the ith iterative process, an output signal $R\tilde{}_{n,i,M}(k)$ for the antenna-specific signal processing unit 402-M of the subtraction unit 1203 of the stream detection unit 1201-n is represented by the following Equation (7). Here, $R_M(k)$ denotes a frequency domain signal of the kth subcarrier output by the FFT unit 413 of the antenna-specific signal processing unit 402-M, $R\hat{}_{n,i,M}(k)$ denotes an interference replica of the kth subcarrier for a stream n received by the antenna 401-M in the ith iterative process generated by the reception replica generation unit 1202-n, and k denotes a subcarrier index.

$$R^{\sim}{}_{n,i,M}\left(k\right) = R_M\left(k\right) - R^{\hat{}}{}_{n,i,M}\left(k\right) \tag{7}$$

The reception replica generation units 1202-1 to 1202-Ns generate the interference replicas (replicas of received signals) using the symbol replicas generated by the symbol replica generation units 1204-1 to 1204-Ns and the propagation channel estimation values generated by the propagation channel estimation units 414. For example, the reception replica generation unit 1202-n that inputs the interference replica to the stream detection unit 1201-n which detects a signal of stream n (n=1, 2, ···, Ns) generates an interference replica by multiplying symbol replicas of streams 1 to (n-1) and streams (n+1) to Ns by the propagation channel estimation values and combining the resultant replicas.

Specifically, in the ith iterative process, a replica of an interference signal is generated, as an interference component of the received signal, using the symbol replicas of streams 1 to (n-1) generated in the ith iterative process, the symbol replicas of streams (n+1) to Ns generated in the i-1th iterative process, and the propagation channel estimation values. A replica $R\hat{}_{n,i,M}(k)$ of an interference signal output by the reception replica generation unit 1202-n for stream n received by the antenna 401-M in the ith iterative process is represented by the following Equation (8).

$$R^{\hat{}}{}_{n,i,M}\left(k\right) = \left( \sum_{u=1}^{n-1} H_{u,M}\left(k\right)S_{u,i}\left(k\right) + \sum_{u=n+1}^{N} H_{u,M}\left(k\right)S^{\hat{}}{}_{u,i-1}\left(k\right) \right) \tag{8}$$

Here, $H_{u,M}(k)$ denotes a propagation channel estimation value of stream u received by the antenna 401-M, and $S\hat{}_{u,i}(k)$ denotes a symbol replica of stream u generated by the symbol replica generation unit 1204-u in the ith iterative process. When i=1 (the first iterative process), the replica of the interference signal is generated from only the symbol replicas of streams 1 to (n-1) generated until a process of detecting the stream n, and the propagation estimation values. The subtraction unit 1203 of the stream detection unit 1201-n performs the above-described interference cancellation process on the signals received by all the antennas 401-1 to 401-M, i.e., respective outputs of the FFT units 413 of the antenna-specific signal processing units 402-1 to 402-M, and outputs the resultant signals to the MIMO separation unit 1205.

Based on the propagation channel estimation values, which are outputs of the propagation channel estimation units 414, the MIMO separation units 1205 perform stream separation of spatially multiplexed (MIMO) signals and propagation channel compensation on the outputs of the subtraction units 1203 to generate modulation symbol sequences of the streams. Specifically, stream signals are regenerated by maximum likelihood estimation. Alternatively, a separation method of calculating a zero factor (ZF) weight or an MMSE weight for the outputs of the subtraction units 123 and multiplying the outputs of the subtraction units 1203 by the calculated weights is used.

For example, weight coefficients $W_{ZF,n}(k)$ and $W_{MMSE,n}(k)$ based on ZF and MMSE criteria of the MIMO separation unit 1205 belonging to the stream detection unit 1201-n can be expressed by the following Equations (9) and (10). Here, $H$ is a complex conjugate transpose of a matrix, $^{-1}$ is an inverse matrix, $\sigma^2$ is noise power, and IN is an N$\times$N unit matrix. $H_n(k)$ in the first process (i=1) in the iterative SIC is expressed by Equation (11), and $H_n(k)$ in an iterative process (i>1) in the iterative SIC is expressed by Equation (12).

$$\mathbf{W}_{ZF,n}(k) = \mathbf{H}_n^H(k)\left(\mathbf{H}_n(k)\mathbf{H}_n^H(k)\right)^{-1} \qquad (9)$$

$$\mathbf{W}_{MMSE,n}(k) = \mathbf{H}_n^H(k)\left(\mathbf{H}_n(k)\mathbf{H}_n^H(k) + \sigma^2\mathbf{I}_M\right)^{-1} \qquad (10)$$

$$\mathbf{H}_n(k) = \begin{pmatrix} H_{1n}(k) & \cdots & H_{1N}(k) \\ \vdots & \ddots & \vdots \\ H_{Mn}(k) & \cdots & H_{MN}(k) \end{pmatrix} \qquad (11)$$

$$\mathbf{H}_n(k) = \begin{pmatrix} H_{1n} \\ \vdots \\ H_{Mn} \end{pmatrix} \qquad (12)$$

The demodulation unit 1207 performs a demodulation process on a modulation symbol sequence, which is an output signal from the MIMO separation unit 1205, and extracts a signal for each coded bit. Preferably, an LLR is output for each coded bit, as in the demodulation unit 708 of the first embodiment shown in FIG. 7. The deinterleaving unit 1208 performs a deinterleaving process on the signal of each coded bit output by the demodulation unit 1207. The deinterleaving process is a rearrangement to return the order rearranged by the interleaving process in the interleaving unit 304 of the packet transmission device 300, to the original.

The depuncturing unit 1209 performs a reverse process of the puncturing (bit removing) process performed by the puncturing unit 124 in the packet transmission device 300, through the same operation as in the depuncturing unit 710 of the first embodiment, and outputs the result of the process to the received signal storage unit 406 and the combining unit 1210. That is, a depuncturing process is performed to insert a previously determined virtual value into the bit removed through the puncturing process. The depuncturing unit 1209 performs the depuncturing process using, as the puncturing pattern, the same puncturing pattern as the puncturing unit 124 in the packet transmission device 300, that is, using pattern 1 of FIG. 4 in even retransmission packets (including the initial transmission packet, where q=0, 2, ...) and pattern 2 of FIG. 4 in the odd retransmission packets (q=1, 3, ...).

The combining unit 1210 combines the output signal of the depuncturing unit 1209 and the previously received packet from the received signal storage unit 406, through the same operation as the operation of the combining unit 711 of the first embodiment.

The decoding unit 1211 outputs an LLR of the coded bit, that is the soft decision result, by performing, on the output signal of the combining unit 1210, an error correction decoding process corresponding to the error correction coding, such as turbo coding and convolutional coding, performed by the error correction encoding unit 122 of the packet transmission device 300. The symbol replica generation units 1204-1 to 1204-Ns generate symbol replicas of the streams using the LLRs of the coded bits generated by the decoding units 1211.

Further, the decoding unit 1211 performs an error detection process on the packet using the error detection such as CRC performed by the error detection encoding unit 121 of the packet transmission device 300, and outputs error detection information to the response signal generation unit 409. When the output error detection information indicates absence of an error, the decoding unit 1211 outputs an information bit sequence excluding a redundant bit for error detection from the bit sequence generating a packet that is a hard decision result of the coded bit LLR of the error correction decoding result by the decoding unit 712.

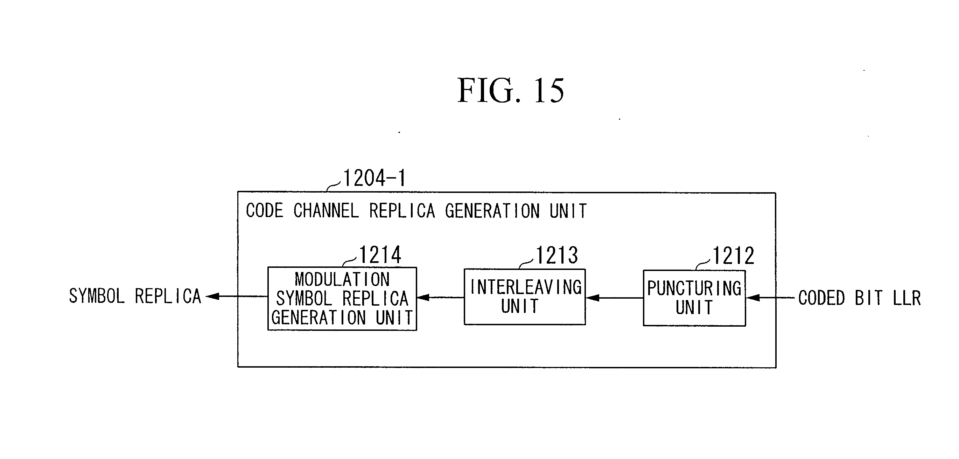

FIG. 15 is a schematic block diagram showing a configuration of the symbol replica generation unit 1204-1. The other symbol replica generation units 1204-2 to 1204-Ns have the same configuration. The symbol replica generation unit 1204-1 generates the symbol replica based on the coded bit LLR output each time the stream separation unit 1201-1 completes signal detection of a signal corresponding to the stream 1, and includes a puncturing unit 1212, an interleaving unit 1213, and a modulation symbol replica generation unit 1214.

The puncturing unit 1212 performs a puncturing process on the coded bit LLR, which is the output signal of the decoding unit 1211, using the same pattern (the puncturing pattern of FIG. 4) as the pattern applied for each stream (packet) by the puncturing unit 124 of the packet transmission device 300, similar to the puncturing unit 721 shown in FIG. 8. The interleaving unit 1213 performs a rearrangement process of the bit arrangement on the output signal from the puncturing unit 1212 using the same pattern as the pattern applied for each stream (packet) by the interleaving unit 304 of the packet transmission device 300, similar to the interleaving unit 722 shown in FIG. 8.

The modulation symbol replica generation unit 1214 generates the modulation symbol replica by modulating an output signal of the interleaving unit 1213 in the same modulation scheme as the modulation unit 305 of the packet transmission device 300 shown in FIG. 11, such as QPSK modulation or 16QAM modulation, similar to the modulation symbol replica generation unit 723 shown in FIG. 8. The modulation symbol replica generation unit 1213, that is, the symbol replica generation unit 1204-1, inputs the generated symbol replica to each of the reception replica generation units 1202-2 to 1202-Ns which generate replicas of interference signals to the streams 2 to Ns.

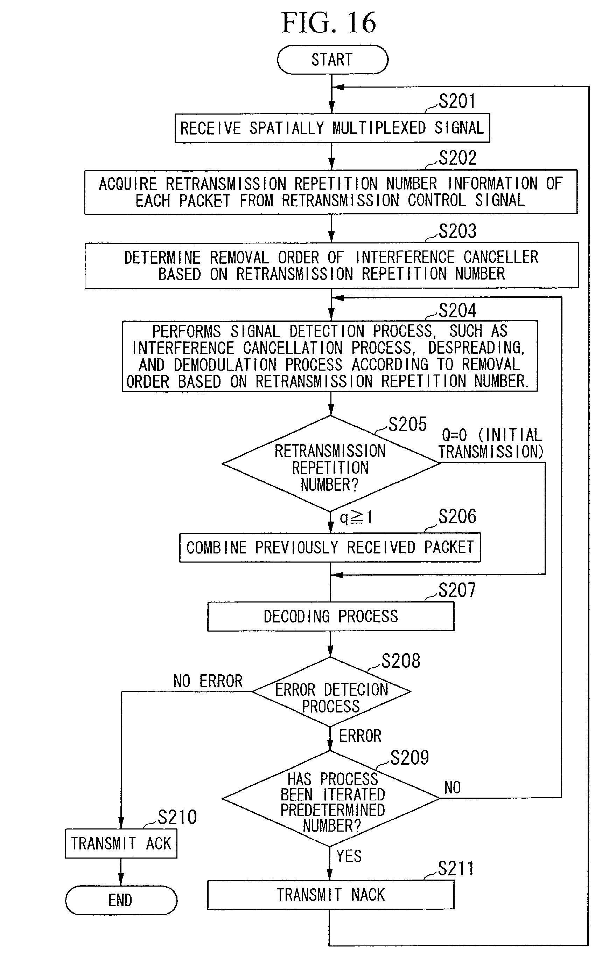

FIG. 16 is a flowchart illustrating a reception operation of the packet reception device 400. If the packet reception device 400 receives a spatially multiplexed signal (S201), the received packet management unit 403 acquires retransmission repetition number information for a packet forming each stream from the retransmission control signal included in the received signal (S202). The detection order determination unit 404 determines order to detect packets (the order to detect streams) from the retransmission repetition number information acquired in step S202 (S203). According to the packet detection order determined in step S203, the interference cancellation unit 405 sequentially performs signal detection, such as an interference cancellation process, MIMO separation, and a demodulation process, on the packet stream (S204).

Next, the combining unit 1210 determines the retransmission repetition number to check how many the packet subjected to signal detection has been retransmitted (S205), and when the packet is an initial transmission packet (retransmission repetition number q=0), the combining unit 1210 does not perform the combining process and inputs the packet to the decoding unit 1211. When the packet is a retransmission packet (q≥1), the combining unit 1210 calls for a previously received signal for the signal subjected to the detection stored in the received signal storage unit 406 and performs the combining process on the previously received signal (S206). The decoding unit 1211 performs a decoding process on an output signal from the combining unit (S207) and determines whether there is an error in the signal-detected packet (S208). When it is determined that there is no error in the packet, a receipt notification ACK, which is response signal indicating absence of the error, is sent to the packet transmission device 300 (S210), and the process is terminated.

On the other hand, when it is determined in step S208 that there is an error in any packet, a determination as to whether the number of the interference cancellation process for the series of streams and the signal detection iteration process reaches a previously determined iteration number (S209). When the number does not reach the iteration number, the process returns to step S204, in which a stream interference cancellation process and signal detection are performed again. When it is determined in step S209 that the number reaches the iteration number, a non-receipt notification NACK is sent as a response signal to the packet transmission device 300 to request retransmission (S211), and the process returns to step S201, in which a next signal is received.

While the interference cancellation unit 405, which is an SIC, is used as the signal detection unit to detect an MIMO spatially multiplexed signal in the present embodiment, another separation method of detecting streams in order, such as Vertical-Bell Laboratories-Layered-Space-Time (V-BLAST), may be used.
While in the present embodiment, the present invention is applied when the MIMO spatially multiplexed signal is received, the present invention may be similarly applied when the code multiplexed and spatially multiplexed signal is received. In this case, a combination between the detection of the code-multiplexed signal of the first embodiment and the detection of the spatially multiplexed signal of the present embodiment is applied.

Thus, in the present embodiment, the detection order determination unit 404 of the packet reception device 400 determines the signal detection order to enable a packet having a large retransmission repetition number among the spatially multiplexed packets to be first detected, and the interference cancellation unit 405 detects a signal of a packet having a large retransmission repetition number according to the signal detection order and removes an interference component resulting from the detected signal of the packet from the received signal. Then, signal detection of a packet having a next great retransmission repetition number is performed in order. Accordingly, a signal of a packet having a large retransmission repetition number and a number of signals that can be combined, i.e., a packet having good signal detection accuracy in the interference cancellation unit 405, is first detected, the interference replica generated from the detected packet signal is removed from the received signal, and then a signal of a packet having a smaller

## EP 2 299 602 A1

retransmission repetition number is detected, thereby improving the detection accuracy of the packet signal having low signal detection accuracy due to a small retransmission repetition number and a small number of signals to be combined. Accordingly, even when the received signal is spatially multiplexed as in the present embodiment, it is possible to prevent delay from increasing due to a large retransmission repetition number of a specific packet.

In the stream signal generation units 301-1 to 301-N of the packet transmission device 300, allocation is performed to transmit a signal from an antenna for which a channel eigenvalue in MIMO transmission is increased as the number of packets having the small retransmission repetition number is increased. Accordingly, the interference cancellation unit 405 of the packet reception device 400 can accurately detect signals of a packet having a small retransmission repetition number and an initial transmission packet. The channel eigenvalue is one index indicating the quality of each stream obtained by performing singular value decomposition on a matrix having a propagation channel response of each stream transmitted from the antenna unit 302-1 to 302-Ns of the packet transmission device 300, as an element. A larger channel eigenvalue indicates that it is a stream that can be transmitted with high quality. Accordingly, accuracy of the removal of the interference component to the retransmission packet signal, which is performed based on the initial transmission packet signal, becomes good and the retransmission packet signal detection can be performed with good accuracy. Further, when the retransmission packet is detected, the detection process is performed on a signal from which an interference component by a retransmission packet having a smaller retransmission repetition number than the retransmission packet to be detected has been removed, thereby improving detection accuracy of a signal having a large retransmission repetition number.

[Third embodiment]

In a third embodiment, a communication system in which the present invention is applied to the case in which an initial transmission packet and a retransmission packet of HARQ are code multiplexed by a spreading code sequence and MCI is removed by an iterative SIC, the communication system including a packet transmission device 500 and a packet reception device 600 different from those in the first embodiment will be described. Further, the spreading code sequence in the present embodiment is an orthogonal variable spreading factor (OVSF).

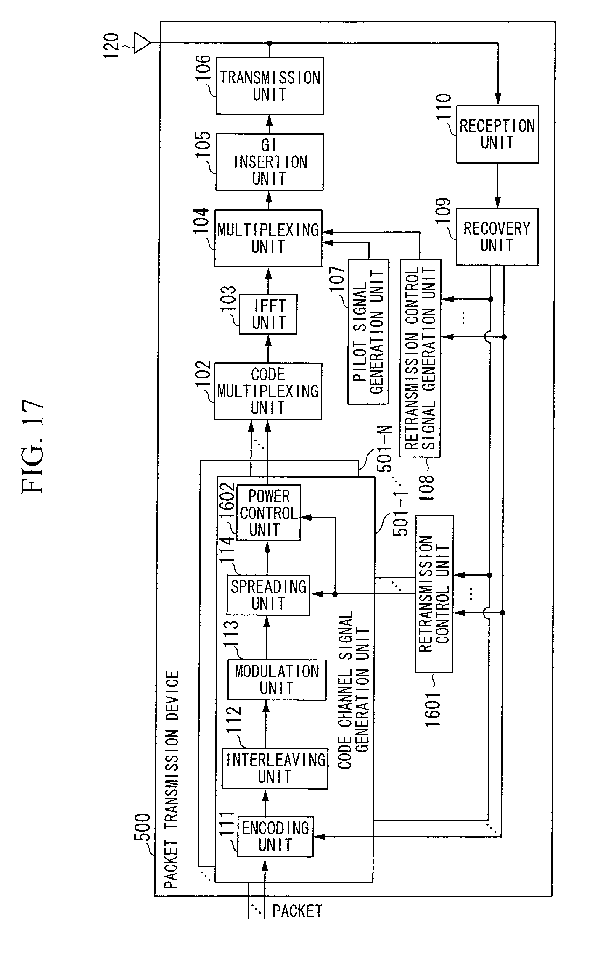

FIG. 17 is a schematic block diagram showing a configuration of a packet transmission device 500 according to the present embodiment. The packet transmission device 500 includes code channel signal generation units 501-1 to 501-N, a code multiplexing unit 102, an IFFT unit 103, a multiplexing unit 104, a GI insertion unit 105, a transmission unit 106, a pilot signal generation unit 107, a retransmission control signal generation unit 108, a recovery unit 109, a reception unit 110, an antenna unit 120, and a retransmission control unit 1601. Each of the code channel signal generation units 501-1 to 501-N includes an encoding unit 111, an interleaving unit 112, a modulation unit 113, a spreading unit 114, and a power control unit 1602.

The packet transmission device 500 differs from the packet transmission device 100 of the first embodiment in that the retransmission control unit 1601 and the power control unit 1602 are additionally provided and the spreading unit 114 obtains control information from the retransmission control unit 1602. Since other units (102 to 114 and 120) have the same function as those in the first embodiment, a portion different from the packet transmission device 100 will now be described.

The retransmission control unit 1601 calculates a retransmission repetition number of a packet of each code channel based on the response signal (receipt notification ACK/non-receipt notification NACK) of the packet reception device 600 received from the recovery unit 109, determines a spreading code sequence multiplied by the spreading unit 114 corresponding to each code channel (each packet) based on the calculated retransmission repetition number, and notifies the spreading unit 114 of the determined spreading code sequence. A method of selecting the spreading code sequence will be described in detail later. Further, the retransmission control unit 1601 calculates a retransmission repetition number of a packet of each code channel based on the response signal (receipt notification ACK/non-receipt notification NACK) of the packet reception device 600 received from the recovery unit 109, determines transmission power to transmit each code channel (each packet) based on the calculated retransmission repetition number, and notifies the power control unit 1602 of the determined transmission power. A method of determining the transmission power will be described in detail later.

The spreading unit 114 multiplies the output signal from the modulation unit 113 by the spreading code sequence according to the notification information from the retransmission control unit 1601. The power control unit 1602 controls power of the output signal from the spreading unit 114, i.e., changes amplitude according to the notified information from the retransmission control unit 1601. The power control unit 1602 controls to transmit each code channel (each packet) at transmission power determined by the retransmission control unit 1601. Alternatively, the spreading unit 114 may change the amplitude of the output signal according to the notified information from the retransmission control unit 1601, instead of the power control unit 1602 being included.

A method of selecting the spreading code sequence by which the spreading unit 114 multiplies each code channel (each packet) of the retransmission control unit 1601 will be described. The retransmission control unit 1601 calculates a retransmission repetition number of a packet transmitted in each code channel from the response signal of the packet reception device 600 received by the recovery unit 109, and sets a spreading code sequence resistant to destruction of the orthogonality by a spreading code sequence by which a code channel having a great retransmission repetition number is multiplied.

For example, when three code channels CH1, CH2 and CH3 are code multiplexed and transmitted, the code channels CH1 and CH2 transmits a packet having the retransmission repetition number of 0 (initial transmission packet), and the code channel CH3 transmits a packet having the retransmission repetition number of 1 (retransmission packet), the retransmission control unit 1601 allocates, to the code channel CH3, a spreading code sequence resistant to destruction of orthogonality, i.e., orthogonality difficult to destruct.

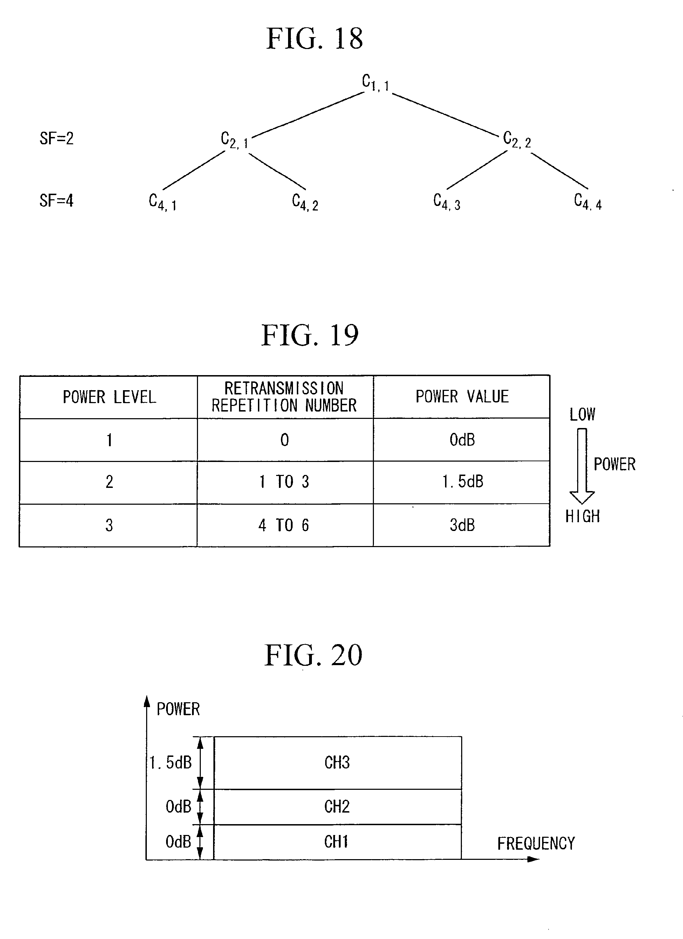

FIG 18 shows an orthogonal variable spreading factor (OVSF) code tree until a spreading factor of 4 (SF =4). When the code channels CH1, CH2 and CH3 described above spread at a spreading factor of 4, a spreading code sequence C4.3 is selected for the code channel CH3 having a greatest retransmission repetition number, and a spreading code sequence C4.1 and a spreading code sequence C4.2 are selected for the code channels CH1 and CH2 having a retransmission repetition number of 0. The spreading code sequences C4.1 and C4.2 are spreading code sequences (C2.1 is called a parent code of C4.1 and C4.2) generated from the spreading code sequence C2.1, whereas the spreading code sequence C4.3 is a spreading code sequence generated from the spreading code sequence C2.2, spreading code sequences having the common parent code C2.2 do not exist among the used spreading code sequences, and resistance to orthogonality maintenance is high. That is, spreading code sequences having different parent codes have resistance to the destruction of orthogonality, i.e., there is the resistance when the number of spreading code sequences having the common parent code among the used spreading code sequences is smaller.

A method by which the retransmission control unit 1601 determines transmission power for each code channel (each packet) and perform power control will be described. The retransmission control unit 1602 calculates the retransmission repetition number of each code channel from the response signal of the packet reception device 600 received by the recovery unit 109 and allocates higher transmission power to a code channel having a great retransmission repetition number than a code channel having a small retransmission repetition number.

For example, the retransmission control unit 1601 stores a power level table for the retransmission repetition number shown in FIG. 19, and determines the transmission power of each code channel according to the power level table. The power level table is a table that stores a power level, a retransmission repetition number, and a power value to correspond to one another as in the example of FIG. 19. For example, the power level table stores power level "1", retransmission repetition number "0", and power value "0dB". to correspond to one another and power level "2", retransmission repetition numbers "1 to 3", and power value "1.5dB" to correspond to one another, so that the greater the retransmission repetition number, the higher the transmission power. The power value of FIG. 19 indicates an increment of the transmission power relative to power level "1."

For example, when three code channels CH1, CH2 and CH3 are code multiplexed and the code channels CH1 and CH2 transmit a packet having the retransmission repetition number of 0 (an initial transmission packet) and the code channel CH3 transmits a packet having the retransmission repetition number of 1 (a retransmission packet), the retransmission control unit 1601 allocates transmission power of power level 2 (1.5dB) to the code channel CH3 having a great retransmission repetition number and transmission power of power level 1(0dB) to CH1 and CH2 as initial transmission packets by referring to the power level table. FIG. 20 illustrates power of a signal when the code multiplexing unit 102 multiplexes the output of the power control unit 1602 in the case in which transmission powers are allocated to the code channels CH1 to CH3 based on the power level table shown in FIG. 19. The code channel CH3 having a great retransmission repetition number is "1.5dB", which is a power value greater than "0dB" of the code channels CH1 and CH2.

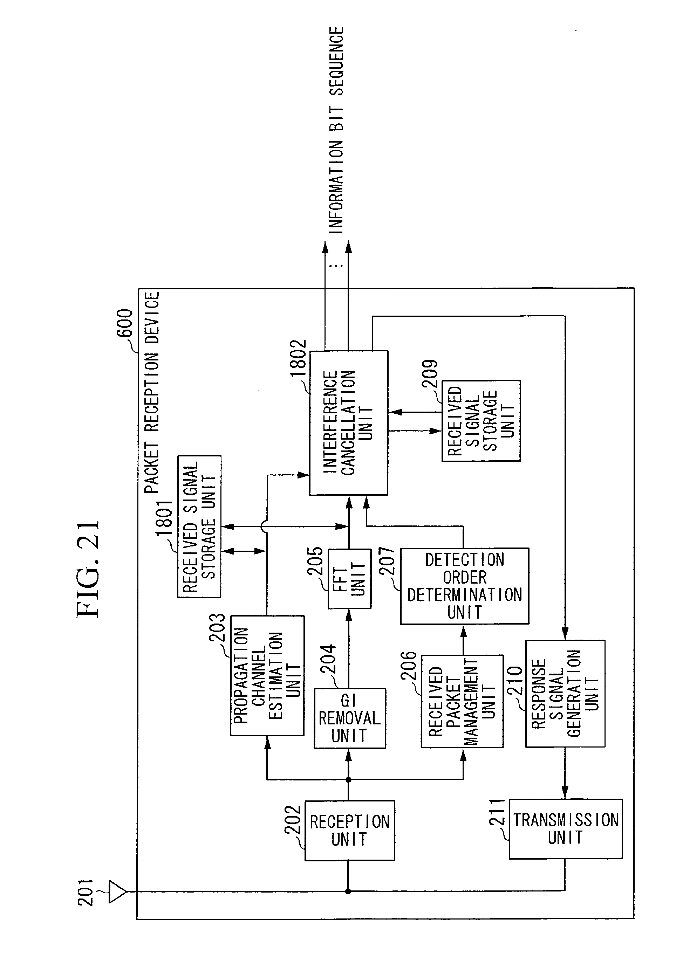

FIG. 21 is a schematic block diagram showing a configuration of a packet reception device 600 according to the present embodiment. The packet reception device 600 includes an antenna unit 201, a reception unit 202, a propagation channel estimation unit 203, a GI removal unit 204, an FFT unit 205, a received packet management unit 206, a detection order determination unit 207, a received signal storage unit 1801, an interference cancellation unit 1802, a received signal storage unit 209, a response signal generation unit 210, and a transmission unit 211.

The packet reception device 600 differs from the packet reception device 200 of the first embodiment in that the received signal storage unit 1801 is additionally provided and the interference cancellation unit 1802 uses a signal from the received signal storage unit 1801 as an input signal. Since the other units (201 to 207 and 209 to 211) have the same function as in the first embodiment, a portion different from the packet reception device 200 will be described hereinafter.

The received signal storage unit 1801 stores output signals from the FFT unit 205 and the propagation channel estimation unit 203 to correspond to each other. Further, when a retransmission packet is included in the output signal from the FFT unit 205, the received signal storage unit 1801 outputs an output signal of the FFT unit 205 including at least one related packet received earlier than the retransmission packet, and a propagation channel estimation value when the related packet is received, to the interference cancellation unit 1802. For example, when the received signal storage unit 1801 receives the second retransmission packet, the received signal storage unit 1801 outputs the output signal of the FFT unit 205 including at least one of the stored initial transmission packet for the second retransmission packet and the first retransmission packet, and a propagation channel estimation value when the packet is received, to the interference cancellation unit 1802.

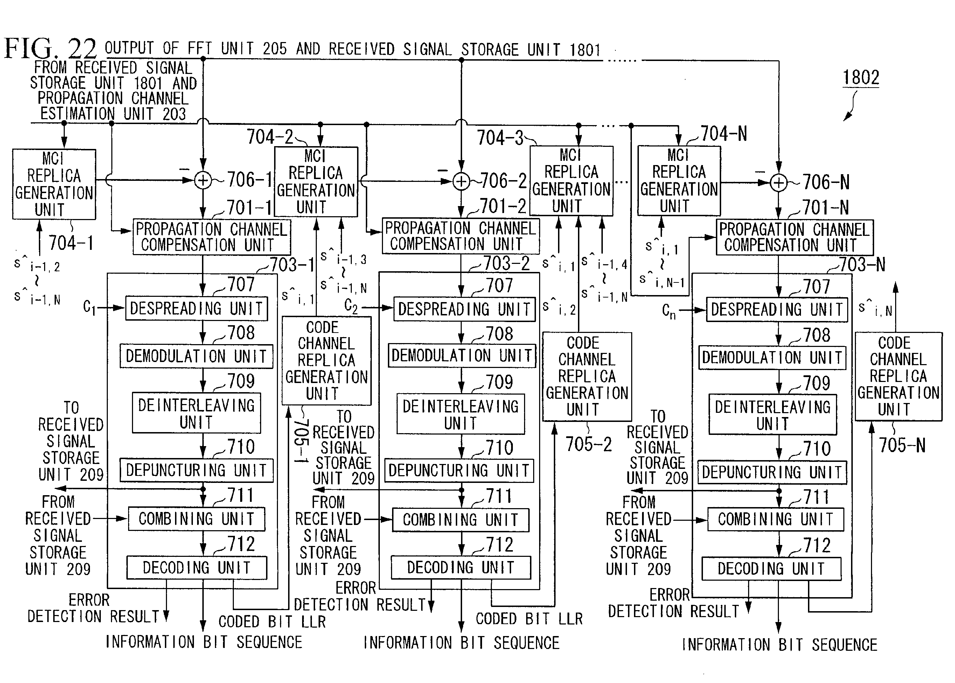

FIG. 22 is a schematic block diagram showing a configuration of the interference cancellation unit 1802 of the packet reception device 600 according to the present embodiment. In the interference cancellation unit 1802 in the present embodiment, inputs to subtraction units 706-1 to 706-N are the output of the FFT unit 205 and the output of the received signal storage unit 1801, and inputs to the MCI replica generation units 704-1 to 704-N and the propagation channel compensation units 701-1 to 701-N are the output of the propagation channel estimation unit 203 and the output of the received signal storage unit 1801.

In addition to the same function of the interference cancellation unit 208 of the packet reception device 200 according to the first embodiment, the interference cancellation unit 1802 (signal detection unit) acquires, when a retransmission packet is included in the signal received by the reception unit 202, i.e., the output signal from the FFT unit 205, the output signal of the FFT unit 205 (a previously received signal) including at least one related packet received earlier than the retransmission packet, and a propagation channel estimation value when the related packet is received, from the received signal storage unit 1801, removes an interference component from the previously received signal using the detected packet according to the detection order determined again for the previously received signal by the detection order determination unit 207, and detects a packet even from the previously received signal.

Here, the related packet (related signal) of the retransmission packet (the retransmission signal; retransmission repetition number q1>0) is an initial transmission packet of the retransmission packet, or retransmission packet of the initial transmission packet of the retransmission packet (q1> retransmission repetition number q2>0), excluding such a retransmission packet itself. Further, the detected packet is a packet detected from the signal received by the reception unit 202, and a packet detected from a previously received signal when the previously received signal is received. Further, a packet stored in the received signal storage unit 209 is used as the packet detected from the previously received signal.

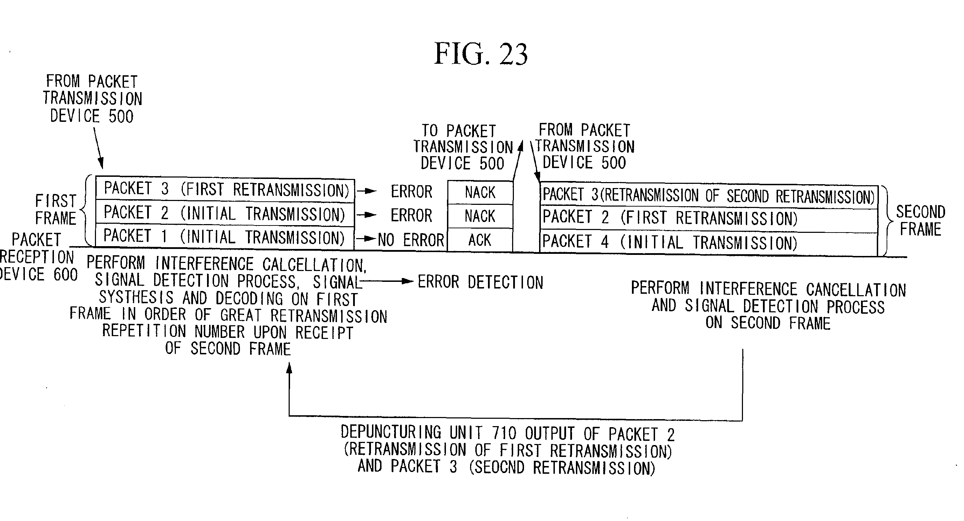

FIG. 23 is a diagram for explaining an operation of the packet reception device 600 according to the present embodiment.

For example, it is assumed that the packet reception device 600 receives a second frame in which packet 3, packet 2 and packet 4 are code-multiplexed. Here, packet 3 is the second retransmission packet. An initial transmission packet is transmitted in a past frame (not shown) and the first retransmission is performed in the first frame transmitted earlier than the second frame. Packet 2 is the first retransmission packet. An initial transmission packet is transmitted in the first frame. Packet 4 is an initial transmission packet.

When the packet reception device 600 receives the second frame, the received packet management unit 206 acquires retransmission repetition number information of each packet from a retransmission control signal for the second frame, and the detection order determination unit 207 determines the detection order as order of a great retransmission repetition number. Since retransmission repetition number information of packet 1 has been previously acquired, in this case, the detection order determined by the detection order determination unit 207 is an order of packet 1, packet 3, packet 2, and packet 4. Here, since packet 1 has been acquired as a correct signal without an error upon receipt of the second frame, packet 1 has the first detection order so that packet 1 can be first detected irrespective of the retransmission repetition number.

Next, an FFT unit 205 output signal of the second frame, i.e., a signal in which packet 2, packet 3 and packet 4 are code-multiplexed is stored in the received signal storage unit 1801. At this time, the initial transmission signal and the first retransmission signal of packet 3 and the initial transmission signal of packet 2 are stored in the received signal storage unit 1801.

Next, the signal of the second frame is input to the interference cancellation unit 1802. The detection process including the MCI cancellation process in the subtraction unit 706, the despreading process in the despreading unit 707, the demodulation process in the demodulation unit 708, deinterleaving in the deinterleaving unit 709, and the depuncturing process in the depuncturing unit 710, and the decoding process in the decoding unit 712 are iteratively performed on the signal a predetermined number. Then, an output of the depuncturing unit 710 is stored in the received signal storage unit 209.

The depuncturing unit 710 output of the packet that has been received earlier than the second frame is also stored in the received signal storage unit 209. Further, in the above-described signal detection process and decoding process of the second frame, packets may be subjected to the detection process and the decoding process in any order. Further, in the above-described signal detection process and decoding process of the second frame, the combining process in the combining unit 711 is not performed.

Next, after the above-described signal detection process and decoding process of the second frame are iteratively performed a predetermined number, the interference cancellation unit 1802 acquires a signal in which packet 1, packet 2, and packet 3 of the first frame are code multiplexed, from the received signal storage unit 1801 and performs a signal detection process and a decoding process on the signal of the first frame. The detection order is order of a packet 1, packet 3 and packet 2 according to a great retransmission repetition number (here, packet 1 is subjected to only a cancellation process for interference to the other packets using a previously detected correct signal stored in the received signal storage unit 209).

For example, a signal detection process for packet 3 is performed as follows: First, the subtraction unit 706-2 subtracts the MCI replica signal generated by the MCI replica generation unit 704-2 from code channel replicas of packet 1 and packet 2 and a propagation channel estimation value upon receipt of the first frame from the received signal storage unit 1801, from the signal of the first frame. Then, the despreading unit 707 performs a despreading process, the demodulation unit 708 performs a demodulation process, the deinterleaving unit 709 performs a deinterleaving process, and the depuncturing unit 710 performs a depuncturing process to obtain the first retransmission signal of packet 3 subjected to the depuncturing process. Further, the combining unit 711 combines the first retransmission signal of packet 3 after the depuncturing process, and the second retransmission signal and the initial transmission signal of packet 3 stored in the received signal storage unit 209. The decoding unit 712 performs a decoding process on an output signal of the combining unit 711, and then outputs the coded bit LLR of packet 3 to the code channel replica generation unit 705-2. The code channel replica generation unit 705-2 generates the code channel replica of packet 3 from the coded bit LLR.

Next, according to the determined order of the detection order determination unit 207, the same signal detection process is performed even on packet 2 like packet 3, and the combining unit 711 combines the result of processing and the first retransmission signal of packet 2 stored in the received signal storage unit 209. The decoding unit 712 performs a decoding process on an output signal of the combining unit 711, and then outputs a coded bit LLR of packet 2 to the code channel replica generation unit 705-3. The interference cancellation, the signal detection process, the combining process, and the decoding process are repetitively performed a predetermined number, and then error detection is performed.

As described above, when the packet reception device 600 receives the signal of the second frame in which the initial transmission packet and the retransmission packet are code-multiplexed, the packet reception device 600 performs the signal detection again in order, beginning with a packet having a great retransmission repetition number upon receipt of the second frame, on the signal of the first frame including a related packet of the retransmission packet using the combining of the retransmission packet and the related packet of the retransmission packet, i.e., the related packet previously received by the packet reception device 600. Thus, a packet signal having a number of signals, which can be combined, having good signal detection accuracy in the interference cancellation unit 1802 is first detected, the interference replica generated from the detected packet signal is removed from the received signal, and then a packet having low signal detection accuracy (a packet having a small retransmission repetition number) is detected, thereby improving the detection accuracy of the packet signal that has low signal detection accuracy. Accordingly, it is possible to prevent delay from increasing due to a great retransmission repetition number of a specific packet.

Further, the packet transmission device 500 preferentially allocate a spreading code sequence resistant to destruction of orthogonality to a packet having a great retransmission repetition number, thereby further improving the signal detection accuracy of the packet having a great retransmission repetition number. As a result, the packet reception device 600 preferentially detects a signal of the packet having a great retransmission repetition number, thereby improving detection accuracy of a packet having a smaller retransmission repetition number signal and low signal detection accuracy.

Further, the packet transmission device 500 allocates higher transmission power to the packet having a great retransmission repetition number, thereby further improving the signal detection accuracy of the packet having a great retransmission repetition number. As a result, the packet reception device 600 preferentially detects the signal of the packet having a great retransmission repetition number, thereby improving signal detection accuracy of the packet having a smaller retransmission repetition number and low signal detection accuracy.

The signal transmitted by the packet transmission device 500 of the present embodiment may be received using the packet reception device 200 of the first embodiment.

Further, the packet transmission device 500 may include any one of spreading code sequence allocation based on the above-described code channel retransmission repetition number, and power control.

While the above-described transmission power control is performed on the code-multiplexed code channel in the present embodiment, the control may be applied to other multiplexed signals, such as the spatial multiplexed signal in the second embodiment.

The packet reception device 600 of the present embodiment can receive the signal transmitted by the packet transmission device 100 of the first embodiment.

While the spreading code sequence having the spreading factor of "4" is used in the present embodiment, a spreading code sequence having another spreading factor may be used. Further, while the OVSF code is used, another code may be used. When a code other than the OVSF code is used, used spreading code sequences may have low correlation so that a desired signal can be detected by dispreading and may not necessarily have orthogonality. In this case, a spreading code sequence having low correlation with a spreading code sequence used in another code channel may be used as the spreading code sequence resistant to destruction of the orthogonality. That is, a spreading code sequence having low correlation with a spreading code sequence used in another code channel may be used for a code channel having a greater retransmission repetition number.

While a system performing multi carrier transmission such as OFDM or multi carrier-code division multiple access (MC-CDMA) has been described in the first to third embodiments, the present invention may be applied when SIC using an iterative process is used in single-carrier transmission such as single carrier-frequency division multiple access (SC-FDMA) or direct spread-code division multiple access (DS-CDMA).

Further, the code channel signal generation units 101-1 to 101-N, the code multiplexing unit 102, the IFFT unit 103, the multiplexing unit 104, the GI insertion unit 105, the pilot signal generation unit 107, and the retransmission control signal generation unit 108 in FIG. 1, the propagation channel estimation unit 203, the GI removal unit 204, the FFT unit 205, the received packet management unit 206, the detection order determination unit 207, the interference cancellation unit 208, and the response signal generation unit 210 in FIG. 5, the stream signal generation units 301-1 to 301-Ns, the retransmission control signal generation unit 311, the recovery unit 312 in FIG. 11, the GI removal unit 412, the FFT unit 413 and the propagation channel estimation unit 414 of the antenna-specific signal processing units 402-1 to 402-M, the received packet management unit 403, the detection order determination unit 404, the interference cancellation unit 405, and the response signal generation unit 409 in FIG. 12, the code channel signal generation units 501-1 to 501-N, the code multiplexing unit 102, the IFFT unit 103, the multiplexing unit 104, the GI insertion unit 105, the pilot signal generation unit 107, the retransmission control signal generation unit 108, the recovery unit 109, the retransmission control unit 1601 in FIG. 17, and the propagation channel estimation unit 203, the GI removal unit 204, the FFT unit 205, the received packet management unit 206, the detection order determination unit 207, the interference cancellation unit 208, and the response signal generation unit 210 in FIG. 21 may be embodied by dedicated software. Further, a program for realizing the functions may be recorded on a computer-readable recording medium, and may be read and executed by the computer system to perform the process in each unit. The "computer system" includes an operating system (OS) or hardware such as peripheral devices.

The "computer-readable recording medium" includes a storage device, such as a flexible disk, a magnetic optical disk, a ROM, or a portable medium such has a CD-ROM, and a hard disk embedded in the computer system. Further, the "computer-readable recording medium" may include a medium for temporarily and dynamically storing programs, like a communication line when a program is transmitted via a network such as the Internet or a communication line such as a telephone line, and a medium for storing programs for a period of time, like a volatile memory inside a computer system consisting of a server and a client in that case. The program may be a program for realizing some of the above-described functions. Alternatively, the program may be a program capable of realizing the above-described functions through a combination with a program previously stored in a computer system.

The embodiments of the present invention have been described in detail with reference to the drawings. However, specific configurations are not limited to the embodiments and may include any design in the scope without departing from the subject matter of the present invention.

Industrial applicability

The present invention is suitable for use in a mobile telephone system in which packets are transmitted from a mobile telephone terminal to a base station device, but present invention is not limited thereto.

Reference Symbols

100: packet transmission device
101-1 to 101-N: code channel signal generation unit
102: code multiplexing unit
103: IFFT unit
104: multiplexing unit
105: GI insertion unit
106: transmission unit
107: pilot signal generation unit
108: retransmission control signal generation unit
109: recovery unit
110: reception unit
111: encoding unit

112: interleaving unit
113: modulation unit
114: spreading unit
120: antenna unit
121: error detection encoding unit
122: error correction encoding unit
123: coded bit storage unit
124: puncturing unit
200: packet reception device
201: antenna unit
202: reception unit
203: propagation channel estimation unit
204: GI removal unit
205: FFT unit
206: received packet management unit
207: detection order determination unit
208: interference cancellation unit
209: received signal storage unit
210: response signal generation unit
211: transmission unit
701-1 to 701-N: propagation channel compensation unit
703-1 to 703-N: code separation unit
704-1 to 704-N: MCI replica generation unit
705-1 to 705-N: code channel replica generation unit
706-1 to 706-N: subtraction unit
707: despreading unit
708: demodulation unit
709: deinterleaving unit
710: depuncturing unit
711: combining unit
712: decoding unit
721: puncturing unit
722: interleaving unit
723: modulation symbol replica generation unit
724: spreading unit
300: packet transmission device
301-1 to 301-Ns: stream signal generation unit
302-1 to 302-Ns: antenna unit
303: encoding unit
304: interleaving unit
305: modulation unit
306: IFFT unit
307: multiplexing unit
308: GI insertion unit
309: transmission unit
310: pilot signal generation unit
311: retransmission control signal generation unit
312: recovery unit
313: reception unit
400: packet reception device
401-1 to 401-M: antenna unit
402-1 to 402-M: antenna-specific signal processing unit
403: received packet management unit
404: detection order determination unit
405: interference cancellation unit
406: received signal storage unit
409: response signal generation unit
410: transmission unit

411: reception unit
412: GI removal unit
413: FFT unit
414: propagation channel estimation unit
500: packet transmission device
501-1 to 501-N: code channel signal generation unit
600: packet reception device
1201-1 to 1201-Ns: stream detection unit
1202-1 to 1202-Ns: reception replica generation unit
1203: subtraction unit
1204-1 to 1204-Ns: symbol replica generation unit
1205: MIMO separation unit
1207: demodulation unit
1208: deinterleaving unit
1209: depuncturing unit
1210: combining unit
1211: decoding unit
1212: puncturing unit
1213: interleaving unit
1214: modulation symbol replica generation unit
1601: retransmission control unit
1602: power control unit
1801: received signal storage unit
1802: interference cancellation unit
3001, 3002: internal encoder
3003: internal interleaving unit

## Claims

1. A communication device which performs a hybrid automatic repeat request to request a transmission source to perform retransmission when an error is detected from a received signal, the communication device comprising:

   a reception unit which receives a signal including an initial transmission signal and a retransmission signal for any one signal, the initial transmission signal and the retransmission signal being multiplexed;
   a detection order determination unit which determines an order of detection of the initial transmission signal and the retransmission signal from the signal received by the reception unit, according to retransmission repetition numbers of the initial transmission signal and the retransmission signal included in the signal received by the reception unit; and
   a signal detection unit which removes an interference component from the signal received by the reception unit using signals detected by the communication device according to the order determined by the detection order determination unit, the detected signals including a detected signal for the initial transmission signal and a detected signal for the retransmission signal, to detect the initial transmission signal and the retransmission signal from the signal received by the reception unit,
   wherein the signal detection unit comprises a combining unit which combined the detected retransmission signal and a signal detected from a previously received signal including at least one related signal received earlier than the retransmission signal.

2. The communication device according to claim 1, wherein the detection order determination unit determines the detection order so that the order of the retransmission signal is earlier than that of the initial transmission signal.

3. The communication device according to claim 1, wherein the detection order determination unit determines the detection order to enable a signal having a greater retransmission repetition number to be first detected.

4. The communication device according to claim 2 or 3, wherein the detection order determination unit determines the orders of the initial transmission signal and the retransmission signal based on a reception level represented by a received signal power; or a received signal to interference plus noise power ratio.

**5.** The communication device according to claim 1, wherein the initial transmission signal and the retransmission signal are signals error-correction-coded in the transmission source, and
when detecting the signal, the signal detection unit generates a replica signal of an interference component to the signal to be detected using a signal obtained by error-correction-decoding the signal detected by the communication device with error correction code, and removes the replica signal from the signal received by the reception unit.

**6.** The communication device according to claim 1, wherein when a retransmission signal is included in the signal received by the reception unit, the signal detection unit removes an interference component from the previously received signal using the detected signal according to a detection order determined again by the detection order determination unit for the previously received signal including at least one related signal received earlier than the retransmission signal to detect the signal from the previously received signal.

**7.** The communication device according to claim 1, wherein the signal received by the reception unit is a code-multiplexed signal in which the initial transmission signal and the retransmission signal are multiplied by unique spreading code sequences, and
after removing the interference component from the signal received by the reception unit, the signal detection unit multiplies the signal from which the interference component has been removed, by the spreading code unique to the signal to be detected, to detect the signal to be detected.

**8.** The communication device according to claim 1, wherein the signal received by the reception unit is a signal in which the initial transmission signal and the retransmission signal are transmitted from different antennas and spatially multiplexed, and
after removing the interference component from the signal received by the reception unit, the signal detection unit detects the signal to be detected from the signal from which the interference component has been removed, based on a propagation channel estimation value for each antenna.

**9.** The communication device according to claim 1, wherein the signal detection unit performs detection of the initial transmission signal and the retransmission signal according to the order determined by the detection order determination unit, once for each signal.

**10.** The communication device according to claim 1, wherein the signal detection unit iteratively performs detection of the initial transmission signal and the retransmission signal according to the order determined by the detection order determination unit several times.

**11.** A communication system comprising a first communication device and a second communication device and performing hybrid automatic repeat request in which the second communication device requests the first communication device to perform retransmission when an error is detected from a signal received from the first communication device, wherein the second communication device comprises:

a reception unit which receives a signal including an initial transmission signal and a retransmission signal for any one signal, the initial transmission signal and the retransmission signal being multiplexed;
a detection order determination unit which determines an order of detection of the initial transmission signal and the retransmission signal from the signal received by the reception unit, according to retransmission repetition numbers of the initial transmission signal and the retransmission signal included in the signal received by the reception unit; and
a signal detection unit which removes an interference component from the signal received by the reception unit using signals detected by the communication device according to the order determined by the detection order determination unit, the detected signals including a detected signal for the initial transmission signal and a detected signal for the retransmission signal, to detect the initial transmission signal and the retransmission signal, and
wherein the signal detection unit comprises a combining unit which combines the detected retransmission signal and a signal detected from a previously received signal including at least one related signal received earlier than the retransmission signal.

**12.** The communication system according to claim 11, wherein the initial transmission signal and the retransmission signal are error-correction-coded signals, and
when detecting the signal, the signal detection unit generates a replica signal of an interference component to the signal to be detected using a signal obtained by error-correction-decoding the signal detected by the communication device with error correction code, and removes the replica signal from the signal received by the reception unit.

13. The communication system according to claim 11, wherein the first communication device comprises:

a retransmission control unit which determines transmission power to transmit the initial transmission signal and the retransmission signal based on retransmission repetition numbers; and
a transmission power control unit which controls to transmit the initial transmission signal and the retransmission signal with the transmission power determined by the retransmission control unit.

14. The communication system according to claim 11, wherein the first communication device comprises:

a retransmission control unit which determines spreading code sequences by which the initial transmission signal and the retransmission signal are multiplied, based on the retransmission repetition numbers; and
a spreading unit which multiplies the initial transmission signal and the retransmission signal by the spreading code sequences determined by the retransmission control unit, and
after removing the interference component from the signal received by the reception unit, the signal detection unit of the second communication device multiplies the signal from which the interference component has been removed, by the spreading codes by which the spreading unit multiplies the signals to be detected, to detect the signals to be detected.

15. The communication system according to claim 14, wherein the retransmission control unit sets a spreading code sequence resistant to destruction of the orthogonality by a spreading code sequence by which a signal of a great retransmission repetition number is multiplied.

16. The communication system according to claim 14, wherein the spreading code sequence is an orthogonal variable spreading factor code.

17. A reception method in a communication device which performs a hybrid automatic repeat request to request a transmission source to perform retransmission when an error is detected from a received signal, the reception method comprising:

receiving, by the communication device, a signal including an initial transmission signal and a retransmission signal for any one signal, the initial transmission signal and the retransmission signal being multiplexed;
determining, by the communication device, an order of detection of the initial transmission signal and the retransmission signal from the signal received in the reception, according to retransmission repetition numbers of the initial transmission signal and the retransmission signal included in the signal received in the reception; and
removing, by the communication device, an interference component from the signal received in the reception using signals detected by the communication device according to the order determined in the determination, the detected signals including a detected signal for the initial transmission signal and a detected signal for the retransmission signal, to detect the initial transmission signal and the retransmission signal from the signal received in the reception,
wherein, in the removal, the communication device combines the detected retransmission signal and a signal detected from a previously received signal including at least one related signal received earlier than the retransmission signal.

18. A communication method in a communication system comprising a first communication device and a second communication device and performing hybrid automatic repeat request in which the second communication device requests the first communication device to perform retransmission when an error is detected from a signal received from the first communication device, the communication method comprising:

transmitting, by the first communication device, an initial transmission signal and a retransmission signal for any one signal;
receiving, by the second communication device, a signal including the initial transmission signal and the retransmission signal for any one signal, the initial transmission signal and the retransmission signal being multiplexed;
determining, by the second communication device, an order of detection of the initial transmission signal and the retransmission signal from the signal received in the reception, according to retransmission repetition numbers of the initial transmission signal and the retransmission signal included in the signal received in the reception;

and

removing, by the second communication device, an interference component from the signal received in the reception using signals detected by the communication device according to the order determined in the determination, the detected signals including a detected signal for the initial transmission signal and a detected signal for the retransmission signal, to detect the initial transmission signal and the retransmission signal,

wherein, in the removal, the second communication device combines the detected retransmission signal and a signal detected from a previously received signal including at least one related signal received earlier than the retransmission signal.

# FIG. 1

EP 2 299 602 A1

# FIG. 2

111

ENCODING UNIT

123
CODED BIT
STORAGE UNIT

PACKET DATA →

121
ERROR
DETECTION
ENCODING
UNIT

→ 122
ERROR
CORRECTION
ENCODING
UNIT

→ 124
PUNCTURING
UNIT
→ TO
INTERLEAVING
UNIT 112

RESPONSE SIGNAL
(FROM RECOVERY UNIT 109)

# FIG. 3

OUTPUT SIGNAL
OF ERROR
DETECTION
ENCODING UNIT

→ SYSTEMATIC
BIT x

3001
INTERNAL
ENCODER
→ PARITY BIT z

122

3003
INTERNAL
INTERLEAVING
UNIT

3002
INTERNAL
ENCODER
→ PARITY BIT z'

# FIG. 4

| | PATTERN 1 | PATTERN 2 |
|---|---|---|
| R=3/4 | $\begin{pmatrix} x \\ z \\ z' \end{pmatrix} = \begin{pmatrix} 111111 \\ 100000 \\ 000100 \end{pmatrix}$ | $\begin{pmatrix} x \\ z \\ z' \end{pmatrix} = \begin{pmatrix} 000000 \\ 011110 \\ 110011 \end{pmatrix}$ |

# FIG. 5

PACKET RECEPTION DEVICE 200

201

203 PROPAGATION CHANNEL ESTIMATION UNIT

202 RECEPTION UNIT

204 GI REMOVAL UNIT

205 FFT UNIT

208 INTERFERENCE CANCELLATION UNIT

INFORMATION BIT SEQUENCE

206 RECEIVED PACKET MANAGEMENT UNIT

207 DETECTION ORDER DETERMINATION UNIT

209 RECEIVED SIGNAL STORAGE UNIT

211 TRANSMISSION UNIT

210 RESPONSE SIGNAL GENERATION UNIT

35

# FIG. 6

# FIG. 7

OUTPUT OF FFT UNIT 205

FROM PROPAGATION CHANNEL ESTIMATION UNIT 203

208

MCI REPLICA GENERATION UNIT (704-1)

704-2 — MCI REPLICA GENERATION UNIT

704-3 — MCI REPLICA GENERATION UNIT

704-N — MCI REPLICA GENERATION UNIT

706-1, 706-2, 706-N

701-1, 701-2, 701-N — PROPAGATION CHANNEL COMPENSATION UNIT

$\hat{s}_{i-1,2}$ ~ $\hat{s}_{i-1,N}$

$\hat{s}_{i-1,3}$ ~ $\hat{s}_{i-1,N}$

$\hat{s}_{i,1}$

$\hat{s}_{i,1}$, $\hat{s}_{i-1,4}$ ~ $\hat{s}_{i-1,N}$

$\hat{s}_{i,1}$ ~ $\hat{s}_{i,N-1}$

$\hat{s}_{i,2}$

$\hat{s}_{i,N}$

703-1, 703-2, 703-N

$C_1$, $C_2$, $C_n$

707 — DESPREADING UNIT

708 — DEMODULATION UNIT

709 — DEINTERLEAVING UNIT

710 — DEPUNCTURING UNIT

711 — COMBINING UNIT

712 — DECODING UNIT

705-1, 705-2, 705-N — CODE CHANNEL REPLICA GENERATION UNIT

TO RECEIVED SIGNAL STORAGE UNIT 209

FROM RECEIVED SIGNAL STORAGE UNIT 209

ERROR DETECTION RESULT

CODED BIT LLR

INFORMATION BIT SEQUENCE

EP 2 299 602 A1

37

# FIG. 8

EP 2 299 602 A1

```
                        ┌705-1
┌──────────────────────────────────────────────────────────────────────────────┐
│  CODE CHANNEL REPLICA GENERATION UNIT                                           │
│                                                                                │
│         ┌724          ┌723              ┌722            ┌721                     │
│    ┌─────────┐  ┌──────────────┐   ┌────────────┐  ┌────────────┐               │
CODE CHANNEL REPLICA│SPREADING│  │ MODULATION   │   │INTERLEAVING│  │ PUNCTURING │   CODED BIT LLR FROM
   TO MCI REPLICA ◄─┤  UNIT   │◄─┤SYMBOL REPLICA│◄──┤    UNIT    │◄─┤    UNIT    │◄── DECODING UNIT 712
GENERATION UNIT 704 └─────────┘  │GENERATION UNIT│  └────────────┘  └────────────┘
│                                └──────────────┘                                │
└──────────────────────────────────────────────────────────────────────────────┘
```

## FIG. 9

DEPUNCTURE OUTPUT OF P1

| $x_{r0}1$ | $z_{r0}1$ | 0 | $x_{r0}2$ | 0 | 0 | $x_{r0}3$ | 0 | 0 | $x_{r0}4$ | 0 | $z'_{r0}4$ | $x_{r0}5$ | 0 | 0 | $x_{r0}6$ | 0 | 0 | $x_{r0}7$ | ... |
|---|---|---|---|---|---|---|---|---|---|---|---|---|---|---|---|---|---|---|---|

$+$

DEPUNCTURE OUTPUT OF P1'

| 0 | 0 | $z'_{r1}1$ | 0 | $z_{r1}2$ | $z'_{r1}2$ | 0 | $z_{r1}3$ | 0 | 0 | $z_{r1}4$ | 0 | 0 | $z_{r1}5$ | $z'_{r1}5$ | 0 | 0 | $z'_{r1}6$ | 0 | ... |
|---|---|---|---|---|---|---|---|---|---|---|---|---|---|---|---|---|---|---|---|

$+$

DEPUNCTURE OUTPUT OF P1' '

| $x_{r2}1$ | $z_{r2}1$ | 0 | $x_{r2}2$ | 0 | 0 | $x_{r2}3$ | 0 | 0 | $x_{r2}4$ | 0 | $z'_{r2}4$ | $x_{r2}5$ | 0 | 0 | $x_{r2}6$ | 0 | 0 | $x_{r2}7$ | ... |
|---|---|---|---|---|---|---|---|---|---|---|---|---|---|---|---|---|---|---|---|

OUTPUT OF COMBINING UNIT 711

| $x_{r0}1$ $+x_{r2}1$ | $z_{r0}1$ $+z_{r2}1$ | $z'_{r1}1$ | $x_{r0}2$ $+x_{r2}2$ | $z_{r1}2$ | $z'_{r1}2$ | $x_{r0}3$ $+x_{r2}3$ | $z_{r1}3$ | 0 | $x_{r0}4$ $+x_{r2}4$ | $z_{r1}4$ | $z'_{r0}4$ $+z'_{r2}4$ | $x_{r0}5$ $+x_{r2}5$ | $z_{r1}5$ | $z'_{r1}5$ | $x_{r0}6$ $+x_{r2}6$ | 0 | $z'_{r1}6$ | $x_{r0}7$ $+x_{r2}7$ | ... |
|---|---|---|---|---|---|---|---|---|---|---|---|---|---|---|---|---|---|---|---|

EP 2 299 602 A1

# FIG. 10

```
                    ( START )
                         │
                         ▼                      ╱S101
        ┌────────────────────────────────────┐
        │  RECEIVE SPATIALLY MULTIPLEXED SIGNAL │
        └────────────────────────────────────┘
                         │                      ╱S102
        ┌────────────────────────────────────────────┐
        │ ACQUIRE RETRANSMISSION REPETITION NUMBER     │
        │ INFORMATION OF EACH PACKET FROM              │
        │ RETRANSMISSION CONTROL SIGNAL                │
        └────────────────────────────────────────────┘
                         │                      ╱S103
        ┌────────────────────────────────────────────┐
        │ DETERMINE REMOVAL ORDER OF INTERFERENCE      │
        │ CANCELLER BASED ON RETRANSMISSION            │
        │ REPETITION NUMBER                            │
        └────────────────────────────────────────────┘
                         │                      ╱S104
        ┌────────────────────────────────────────────┐
        │ PERFORMS SIGNAL DETECTION PROCESS, SUCH AS   │
        │ INTERFERENCE CANCELLATION PROCESS,           │
        │ DESPREADING, AND DEMODULATION PROCESS        │
        │ ACCORDING TO REMOVAL ORDER BASED ON          │
        │ RETRANSMISSION REPETITION NUMBER.            │
        └────────────────────────────────────────────┘
                         │
                         ▼       ╱S105        Q=0 (INITIAL
                     ◇ RETRANSMISSION ◇────── TRANSMISSION)
                        REPETITION
                         NUMBER?
                         │ q≧1              ╱S106
        ┌────────────────────────────────────┐
        │  COMBINE PREVIOUSLY RECEIVED PACKET  │
        └────────────────────────────────────┘
                         │                      ╱S107
        ┌────────────────────────────────────┐
        │        DECODING PROCESS             │
        └────────────────────────────────────┘
                         │
           NO ERROR       ▼       ╱S108
        ◄────────── ◇ ERROR DETECION ◇
                        PROCESS
                         │ ERROR
                         ▼       ╱S109
                    ◇ HAS PROCESS ◇─── NO
                     BEEN ITERATED
                     PREDETERMINED
                        NUMBER?
                         │ YES
     ╱S110                               ╱S111
  ┌──────────────┐              ┌──────────────────┐
  │ TRANSMIT ACK │              │  TRANSMIT NACK   │
  └──────────────┘              └──────────────────┘
         │
       ( END )
```

# FIG. 11

EP 2 299 602 A1

## FIG. 12

EP 2 299 602 A1

## FIG. 13

EP 2 299 602 A1

FIG. 14

405

FROM PROPAGATION CHANNEL ESTIMATION UNIT 414

OUTPUT OF FFT UNIT 413

**Stage 1201-1 / 1201-2 / 1201-Ns:**

1202-1 RECEPTION REPLICA GENERATION UNIT ($\hat{s}_{i-1,2} \sim \hat{s}_{i-1,Ns}$)

1203 (⊕)

1205 MIMO SEPARATION UNIT — 1207 DEMODULATION UNIT — 1208 DEINTERLEAVING UNIT — 1209 DEPUNCTURING UNIT — 1210 COMBINING UNIT — 1211 DECODING UNIT

TO RECEIVED SIGNAL STORAGE UNIT 406

FROM RECEIVED SIGNAL STORAGE UNIT 406

CODED BIT LLR

ERROR DETECTION RESULT

INFORMATION BIT SEQUENCE

1202-2 RECEPTION REPLICA GENERATION UNIT ($\hat{s}_{i-1,3} \sim \hat{s}_{i-1,Ns}$, $\hat{s}_{i,1}$)

1204-1 SYMBOL REPLICA GENERATION UNIT

1202-3 RECEPTION REPLICA GENERATION UNIT ($\hat{s}_{i-1,4} \sim \hat{s}_{i-1,Ns}$, $\hat{s}_{i,1} \sim \hat{s}_{i,2}$)

1204-2 SYMBOL REPLICA GENERATION UNIT

ERROR DETECTION RESULT

INFORMATION BIT SEQUENCE

1202-Ns RECEPTION REPLICA GENERATION UNIT ($\hat{s}_{i,1} \sim \hat{s}_{i,Ns-1}$)

1204-Ns SYMBOL REPLICA GENERATION UNIT ($\hat{s}_{i,Ns}$)

ERROR DETECTION RESULT

INFORMATION BIT SEQUENCE

# FIG. 15

CODE CHANNEL REPLICA GENERATION UNIT — 1204-1

SYMBOL REPLICA ← MODULATION SYMBOL REPLICA GENERATION UNIT (1214) ← INTERLEAVING UNIT (1213) ← PUNCTURING UNIT (1212) ← CODED BIT LLR

EP 2 299 602 A1

# FIG. 16

```
                    ( START )
                        │
                        ▼
                                    ⌐S201
    ┌─────────────────────────────────────────────┐
    │ RECEIVE SPATIALLY MULTIPLEXED SIGNAL         │
    └─────────────────────────────────────────────┘
                        │
                        ▼             ⌐S202
    ┌─────────────────────────────────────────────┐
    │ ACQUIRE RETRANSMISSION REPETITION NUMBER INFORMATION OF │
    │ EACH PACKET FROM RETRANSMISSION CONTROL SIGNAL │
    └─────────────────────────────────────────────┘
                        │
                        ▼             ⌐S203
    ┌─────────────────────────────────────────────┐
    │ DETERMINE REMOVAL ORDER OF INTERFERENCE CANCELLER │
    │ BASED ON RETRANSMISSION REPETITION NUMBER    │
    └─────────────────────────────────────────────┘
                        │
                        ▼             ⌐S204
    ┌─────────────────────────────────────────────┐
    │ PERFORMS SIGNAL DETECTION PROCESS, SUCH AS   │
    │ INTERFERENCE CANCELLATION PROCESS, DESPREADING, │
    │ AND DEMODULATION PROCESS ACCORDING TO REMOVAL │
    │ ORDER BASED ON RETRANSMISSION REPETITION NUMBER. │
    └─────────────────────────────────────────────┘
                        │
                        ▼        ⌐S205
                   ◇ RETRANSMISSION ◇ ── Q=0 (INITIAL
                     REPETITION           TRANSMISSION)
                     NUMBER?
                        │ q≧1      ⌐S206
    ┌─────────────────────────────────────────────┐
    │ COMBINE PREVIOUSLY RECEIVED PACKET           │
    └─────────────────────────────────────────────┘
                        │
                        ▼             ⌐S207
    ┌─────────────────────────────────────────────┐
    │ DECODING PROCESS                             │
    └─────────────────────────────────────────────┘
                        │
                        ▼        ⌐S208
    NO ERROR ─────── ◇ ERROR DETECION ◇
                       PROCESS
                        │ ERROR
                        ▼        ⌐S209
                   ◇ HAS PROCESS ◇ ── NO
                     BEEN ITERATED
                     PREDETERMINED
                     NUMBER?
        ⌐S210           │ YES
    ┌──────────┐        ▼             ⌐S211
    │TRANSMIT ACK│   ┌─────────────────────────┐
    └──────────┘    │ TRANSMIT NACK           │
         │          └─────────────────────────┘
         ▼
    ( END )
```

## FIG. 17

# FIG. 18

SF=2

SF=4

# FIG. 19

| POWER LEVEL | RETRANSMISSION REPETITION NUMBER | POWER VALUE |
|:-----------:|:--------------------------------:|:-----------:|
| 1 | 0 | 0dB |
| 2 | 1 TO 3 | 1.5dB |
| 3 | 4 TO 6 | 3dB |

LOW

POWER

HIGH

# FIG. 20

FIG. 21

INFORMATION BIT SEQUENCE

600 PACKET RECEPTION DEVICE

201

202 RECEPTION UNIT

203 PROPAGATION CHANNEL ESTIMATION UNIT

204 GI REMOVAL UNIT

205 FFT UNIT

206 RECEIVED PACKET MANAGEMENT UNIT

207 DETECTION ORDER DETERMINATION UNIT

1801 RECEIVED SIGNAL STORAGE UNIT

1802 INTERFERENCE CANCELLATION UNIT

209 RECEIVED SIGNAL STORAGE UNIT

210 RESPONSE SIGNAL GENERATION UNIT

211 TRANSMISSION UNIT

FIG. 22

# FIG. 23

FROM PACKET
TRANSMISSION
DEVICE 500

TO PACKET
TRANSMISSION
DEVICE 500

FROM PACKET
TRANSMISSION
DEVICE 500

FIRST FRAME

| PACKET 3 (FIRST RETRANSMISSION) | → ERROR | NACK |
| PACKET 2 (INITIAL TRANSMISSION) | → ERROR | NACK |
| PACKET 1 (INITIAL TRANSMISSION) | → NO ERROR | ACK |

SECOND FRAME

| PACKET 3(RETRANSMISSION OF SECOND RETRANSMISSION) |
| PACKET 2 (FIRST RETRANSMISSION) |
| PACKET 4 (INITIAL TRANSMISSION) |

PACKET RECEPTION DEVICE 600

PERFORM INTERFERENCE CALCELLATION,
SIGNAL DETECTION PROCESS, SIGNAL
SYSTHESIS AND DECODING ON FIRST
FRAME IN ORDER OF GREAT RETRANSMISSION
REPETITION NUMBER UPON RECEIPT
OF SECOND FRAME

→ ERROR DETECTION

PERFORM INTERFERENCE CANCELLATION
AND SIGNAL DETECTION PROCESS
ON SECOND FRAME

DEPUNCTURING UNIT 710 OUTPUT OF PACKET 2
(RETRANSMISSION OF FIRST RETRANSMISSION)
AND PACKET 3 (SEOCND RETRANSMISSION)

EP 2 299 602 A1

<table>
<tr><td colspan="2" align="center"><strong>INTERNATIONAL SEARCH REPORT</strong></td><td colspan="2">International application No.<br><br>PCT/JP2009/062475</td></tr>
</table>

A. CLASSIFICATION OF SUBJECT MATTER
*H04B1/707*(2006.01)i, *H04J11/00*(2006.01)i, *H04L1/18*(2006.01)i, *H04W28/04* (2009.01)i

According to International Patent Classification (IPC) or to both national classification and IPC

B. FIELDS SEARCHED

Minimum documentation searched (classification system followed by classification symbols)
H04B1/707, H04J11/00, H04L1/18, H04W28/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-238423 A  (Matsushita Electric Industrial Co., Ltd.),<br>07 September, 2006 (07.09.06),<br>Par. Nos. [0201] to [0213]; Fig. 5<br>& US 2009/0016263 A1    & WO 2006/080352 A1<br>& CN 101133670 A | 1-18 |
| A | JP 62-236233 A  (NEC Corp.),<br>16 October, 1987 (16.10.87),<br>Claims<br>(Family: none) | 1-18 |
| P,A | WO 2008/093619 A1  (Matsushita Electric Industrial Co., Ltd.),<br>07 August, 2008 (07.08.08),<br>Par. Nos. [0177] to [0283]; Fig. 22<br>(Family: none) | 1-18 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>31 July, 2009 (31.07.09) | Date of mailing of the international search report<br>11 August, 2009 (11.08.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/062475

C (Continuation).  DOCUMENTS CONSIDERED TO BE RELEVANT

| Category* | Citation of document, with indication, where appropriate, of the relevant passages | Relevant to claim No. |
|---|---|---|
| P,A | WO 2009/047910 A1 (Panasonic Corp.), 16 April, 2009 (16.04.09), Par. Nos. [0060] to [0064] (Family: none) | 1-18 |
| A | Takashi Yoshimoto et al., 'Impact of Channel Estimation Error on MC-CDM systems with Iterative Inter-Code Interference Canceller', Proceedings of the 2008 IEICE General Conference, IEICE, 2008.03.05, p. 414, B-5-28 | 1-18 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008179111 A

**Non-patent literature cited in the description**

• **D. Chase.** Code combining-A maximum likelihood decoding approach for combining and arbitrary number of noisy packets. *IEEE Trans. Commun.,* May 1985, vol. COM-33, 385-393

• **J. Hagenauer.** Rate-compatible punctured convolutional codes (RCPC codes) and their application. *IEEE Trans. Commun.,* April 1988, vol. 36, 389-400

• **Ishihara ; Takeda ; Adachi.** DS-CDMA Frequency Domain MAI Canceller. *The Institute of Electronics, Information and Communication Engineers, Technical Report RCS 2004-316,* January 2005

• **Akita ; Suyama ; Fukawa ; Suzuki.** Interference Canceller in Downlink Using Transmission Power Control of MC-CDMA. *The Institute of Electronics, Information and Communication Engineers, Technical Report RCS 2002-35,* April 2002